# EUROPEAN PATENT SPECIFICATION

(11) **EP 4 518 169 B1**
(45) Date of publication and mention of the grant of the patent: **11.11.2026**
(21) Application number: 23831772.1
(22) Date of filing: 16.06.2023
(51) Int. Cl.: H04B 1/401, H04B 1/00, H04B 1/50, H04M 1/02

(54) **ELECTRONIC DEVICE COMPRISING ANTENNA**
ELEKTRONISCHE VORRICHTUNG MIT ANTENNE
DISPOSITIF ÉLECTRONIQUE COMPRENANT UNE ANTENNE

(30) Priority: 29.06.2022 KR 20220079699; 12.08.2022 KR 20220101280
(43) Date of publication of application: 05.03.2025
(73) Proprietor: Samsung Electronics Co., Ltd., Suwon-si, Gyeonggi-do 16677 (KR)
(72) Inventor: YOO, Jangsun, Suwon-si, Gyeonggi-do 16677 (KR); KIM, Hakjin, Suwon-si, Gyeonggi-do 16677 (KR); MOON, Jihye, Suwon-si, Gyeonggi-do 16677 (KR); SONG, Youngheon, Suwon-si, Gyeonggi-do 16677 (KR); LEE, Myeonggil, Suwon-si, Gyeonggi-do 16677 (KR); LEE, Heeseung, Suwon-si, Gyeonggi-do 16677 (KR); LIM, Gun, Suwon-si, Gyeonggi-do 16677 (KR)
(74) Representative: Appleyard Lees IP LLP
(86) International application number: PCT/KR2023/008337
(87) International publication number: WO 2024/005412

(56) References cited:
- EP-A1- 3 926 935
- WO-A1-2018/016913
- KR-A- 20170 019 838
- KR-A- 20170 019 838
- KR-A- 20180 010 957
- KR-A- 20200 023 921
- KR-A- 20210 075 834
- KR-A- 20210 075 834
- US-A1- 2015 171 916

## Description

### Technical Field

Various embodiments disclosed in this specification relate to an electronic device including an antenna.

### Background Art

Nowadays, with the development of electronic technology, various electronic devices such as smart phones, tablet personal computers, and notebook personal computers are becoming widespread.

An electronic device may include a plurality of antennas to implement mobile communication technologies such as long term evolution carrier aggregation (LTE CA) and 5^{th} generation (5G) communication.
The plurality of antennas may include housing for forming the exterior appearance of the electronic device as an antenna element. For example, the housing of the electronic device may include conductive portions including a conductive material (e.g., metal), and the conductive portions may operate as radiating elements for propagating wireless signals. KR20210075834A describes an electronic device including an antenna and switching method thereof. KR20170019838A describes electronic devices including antenna devices. WO2018/016913A1 describes a communication method performed in an electronic device

### Disclosure

### Technical Problem

The housing of an electronic device may be provided with a connector for connecting an external device. Because a conductive portion of the housing for forming an antenna of the electronic device needs to be provided to avoid the connector of the housing, it may be difficult to satisfy the physical length of a conductive portion for supporting the required communication frequency band.

For example, a notebook PC may include upper housing and lower housing that are pivotally coupled about a hinge part. In general, a substrate including a processor and/or a communication circuit is placed in the lower housing, which touches a bottom when it is used, and a display may be placed in the upper housing. A plurality of connectors on the notebook PC may be provided on the lower housing for convenience of use. Moreover, the antenna of the notebook PC may be formed by conductive portions of the lower housing for the shortest connection with a communication circuit inside the lower housing. Because the resonant frequency of an antenna depends on physical lengths of the conductive portions, it may be difficult to provide a conductive portion having a relatively long length for a low frequency band while the plurality of connectors are avoided in the lower housing, for example. In the meantime, the housing of the electronic device may be vulnerable to external impact due to the conductive portion having the relatively long length.

### Technical Solution

According to an embodiment disclosed in this specification, an electronic device includes a housing including a conductive portion, the conductive portion including a first segment, a second segment separated from the first segment by a first gap, and a third segment separated from the first segment and the second segment by a second gap, a first switch configured to selectively connect the first segment and the second segment, a first wireless communication circuit including a first port, a second port, and a third port, the first port being electrically connected to the first segment, a second wireless communication circuit, and a second switch configured to selectively connect the second port and the second segment. A third switch is connected to the third segment and configured to selectively connect the third segment to the third port of the first wireless communication circuit or the second wireless communication circuit. The first wireless communication circuit is configured to transmit and/ or receive wireless signals of different frequency bands through the first port, the second port, and the third port, respectively. The first wireless communication circuit is configured to operate in a first mode or a second mode. The first mode is configured to transmit and/or receive a wireless signal in a first frequency range by using a first antenna formed from the first segment electrically open to the second segment through the first switch, and to transmit and/or receive a wireless signal in the first frequency range by using a second antenna formed from the second segment electrically open to the first segment through the first switch and electrically connected to the second port through the second switch. The second mode is configured to transmit and/or receive a wireless signal in the first frequency range and a second frequency range by using a third antenna formed from the first segment electrically connected to the second segment through the first switch and the second segment electrically open to the second port through the second switch. The second frequency range is different from the first frequency range.

### Advantageous Effects

According to embodiments disclosed in this specification, an electronic device supports various wireless communication frequency bands while maintaining the rigidity of housing, by using a plurality of segments included in the housing as an antenna individually or in combination depending on communication situations.

### Description of Drawings

FIG. 1 is a block diagram of an electronic device in a network environment, according to various embodiments.
FIG. 2 is a plan view showing a front exterior appearance of an electronic device, according to an embodiment.
FIG. 3 is a block diagram of an electronic device, according to an embodiment.
FIG. 4 is a block diagram showing a connection relationship between components when a first wireless communication circuit of an electronic device operates in a first mode, according to an embodiment.
FIG. 5 is a block diagram showing a connection relationship between components when a first wireless communication circuit of an electronic device operates in a second mode, according to an embodiment.
FIG. 6 is a block diagram of an electronic device, according to an embodiment.
FIG. 7 is a block diagram showing a connection relationship between components when a first wireless communication circuit of an electronic device operates in a first mode, according to an embodiment.
FIG. 8 is a block diagram showing a connection relationship between components when a first wireless communication circuit of an electronic device operates in a second mode, according to an embodiment.
FIG. 9 is a block diagram showing a connection relationship between components when a first wireless communication circuit of an electronic device operates in a third mode, according to an embodiment.
FIG. 10 is a block diagram of an electronic device, according to an embodiment.
FIG. 11 is a block diagram showing a connection relationship between components when a first wireless communication circuit of an electronic device operates in a first mode, according to an embodiment.
FIG. 12 is a block diagram showing a connection relationship between components when a first wireless communication circuit of an electronic device operates in a second mode, according to an embodiment.
FIG. 13 is a block diagram showing a connection relationship between segments when a first wireless communication circuit of an electronic device operates in a fourth mode, according to an embodiment.
FIG. 14 is a flowchart of an operation of an electronic device, according to an embodiment.
FIG. 15 is a flowchart of an operation of an electronic device, according to an embodiment.

With regard to the description of drawings, similar components may be marked by similar reference marks/numerals.

### Mode for Invention

Hereinafter, various embodiments of the disclosure may be described with reference to accompanying drawings. With regard to description of drawings, similar components may be marked by similar reference numerals.

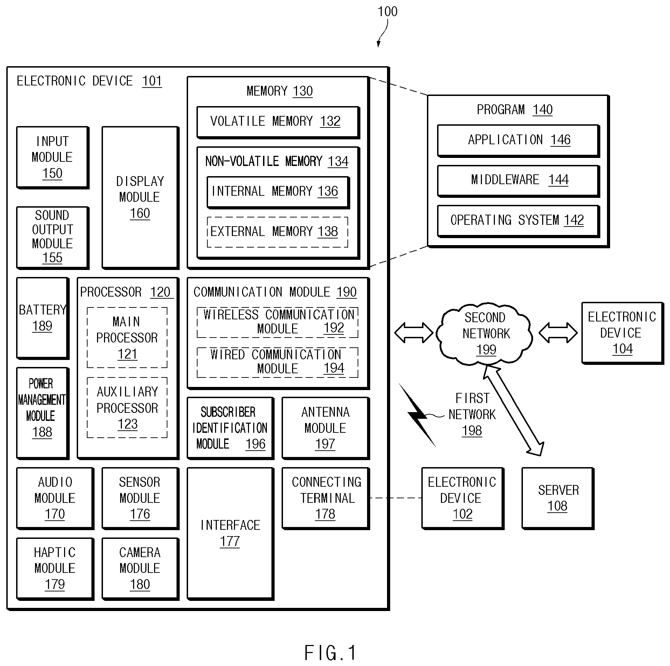

FIG. 1 is a block diagram of an electronic device in a network environment, according to various embodiments.

Referring to FIG. 1, the electronic device 101 in the environment information 100 may communicate with an electronic device 102 over a first network 198 (e.g., a short range wireless communication network) or may communicate with at least one of an electronic device 104 or a server 108 over a second network 199 (e.g., a long distance wireless communication network). According to an embodiment, the electronic device 101 may communicate with the electronic device 104 through the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module 196, or an antenna module 197. In any embodiment, the electronic device 101 may not include at least one (e.g., the connecting terminal 178) of the above-described components or may further include one or more other components. In some embodiments, some (e.g., the sensor module 176, the camera module 180, or the antenna module 197) of these components may be integrated into a single component (e.g., the display module 160).

For example, the processor 120 may execute software (e.g., a program 140) to control at least another component (e.g., hardware or software component) of the electronic device 101 connected to the processor 120, and may process and calculate various types of data. According to an embodiment, as at least part of data processing or calculation, the processor 120 may store instructions or data received from other components (e.g., the sensor module 176 or the communication module 190) into a volatile memory 132, may process instructions or data stored in the volatile memory 132, and may store the result data in a nonvolatile memory 134. According to an embodiment, the processor 120 may include a main processor 121 (e.g., a central processing unit or an application processor) and an auxiliary processor 123 (e.g., a graphic processing unit, a neural processing unit (NPU), an image signal processor, a sensor hub processor, or a communication processor) capable of operating independently or together with the main processor. For example, when the electronic device 101 includes the main processor 121 and the auxiliary processor 123, the auxiliary processor 123 may be configured to use less power than the main processor 121 or to be specialized for a specified function. The auxiliary processor 123 may be implemented separately from the main processor 121 or as part of the main processor 121.

For example, the auxiliary processor 123 may control at least part of the functions or states associated with at least one (e.g., the display module 160, the sensor module 176, or the communication module 190) of the components of the electronic device 101, instead of the main processor 121 while the main processor 121 is in an inactive (e.g., sleep) state or together with the main processor 121 while the main processor 121 is in an active (e.g., the execution of an application) state. According to an embodiment, the auxiliary processor 123 (e.g., an image signal processor or a communication processor) may be implemented as a part of operatively associated other components (e.g., the camera module 180 or the communication module 190). According to an embodiment, the auxiliary processor 123 (e.g., a neural network processing unit) may include a hardware structure specialized to process an artificial intelligence model. The artificial intelligence model may be generated through machine learning. For example, the learning may be performed in the electronic device 101, in which an artificial intelligence model is performed, or may be performed through a separate server (e.g., the server 108). For example, the learning algorithm may include supervised learning, unsupervised learning, semi-supervised learning, or reinforcement learning, but is not limited to the above example. The artificial intelligence model may include a plurality of artificial neural network layers. The artificial neural network may be one of a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more of the networks, but may not be limited to the above-described example. In addition to a hardware structure, additionally or alternatively, the artificial intelligence model may include a software structure.

The memory 130 may store various pieces of data used by at least one component (e.g., the processor 120 or the sensor module 176) of the electronic device 101. For example, data may include software (e.g., the program 140) and input data or output data for instructions associated with the software. The memory 130 may include the volatile memory 132 or the nonvolatile memory 134.

The program 140 may be stored in the memory 130 as software, and may include, for example, an operating system 142, a middleware 144, or an application 146.

The input module 150 may receive instructions or data to be used for the component (e.g., the processor 120) of electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for a general purpose, such as multimedia play or recording play. The receiver may be used to receive an incoming call. According to an embodiment, the receiver may be implemented separately from the speaker or may be implemented as a part of the speaker.

The display module 160 may visually provide information to the outside (e.g., the user) of the electronic device 101. The display module 160 may include, for example, a display, a hologram device, or a control circuit for controlling a projector and a corresponding device. According to an embodiment, the display module 160 may include a touch sensor configured to sense a touch, or a pressure sensor configured to measure the strength of force generated by the touch.

The audio module 170 may convert sound to an electrical signal, or reversely, may convert an electrical signal to sound. According to an embodiment, the audio module 170 may obtain sound through the input module 150, or may output sound through the sound output module 155, or through an external electronic device (e.g., the electronic device 102) (e.g., a speaker or a headphone) directly or wirelessly connected with the electronic device 101.

The sensor module 176 may sense an operation state (e.g., power or a temperature) of the electronic device 101 or an external environment state (e.g., a user state), and may generate an electrical signal or a data value corresponding the sensed state. According to an embodiment, the sensor module 176 may include, for example, a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an illumination sensor.

The interface 177 may support one or more specified protocols that may be used to directly and wirelessly connect the electronic device 101 with an external electronic device (e.g., the electronic device 102). According to an embodiment, the interface 177 may include, for example, an HDMI (high-definition multimedia interface), a USB (universal serial bus) interface, an SD card interface, or an audio interface.

The connecting terminal 178 may include a connector that may allow the electronic device 101 to be physically connected with an external electronic device (e.g., the electronic device 102). According to an embodiment, the connecting terminal 178 may include, for example, a HDMI connector, an USB connector, an SD card connector, or an audio connector (e.g., a headphone connector).

The haptic module 179 may convert an electrical signal to a mechanical stimulation (e.g., vibration or movement) or an electrical stimulation which the user may perceive through the sense of touch or the sense of movement. According to an embodiment, the haptic module 179 may include, for example, a motor, a piezoelectric sensor, or an electrical stimulation device.

The camera module 180 may shoot a still image or a video image. According to an embodiment, the camera module 180 may include one or more lenses, image sensors, image signal processors, or flashes (or electrical flashes).

The power management module 188 may manage the power which is supplied to the electronic device 101. According to an embodiment, the power management module 188 may be implemented, for example, as at least part of a power management integrated circuit (PMIC).

The battery 189 may power at least one component of the electronic device 101. According to an embodiment, the battery 189 may include, for example, a primary cell not rechargeable, a secondary cell rechargeable, or a fuel cell.

The communication module 190 may establish a direct (or wired) communication channel or a wireless communication channel between the electronic device 101 and an external electronic device (e.g., the electronic device 102, the electronic device 104, or the server 108) and may perform communication through the established communication channel. The communication module 190 may include one or more communication processors which are operated independently of the processor 120 (e.g., an application processor) and support direct (or wired) communication or wireless communication. According to an embodiment, the communication module 190 may include a wireless communication module 192 (e.g., a cellular communication module, a short range wireless communication module, or a global navigation satellite system (GNSS) communication module) or a wired communication module 194 (e.g., a local area network (LAN) communication module or a power line communication module). The corresponding communication module among these communication modules may communicate with an external electronic device 104 through a first network 198 (e.g., a short-range communication network such as Bluetooth, wireless fidelity (WiFi) direct or infrared data association (IrDA)) or a second network 199 (e.g., long-range wireless communication network such as a legacy cellular network, 5G networks, next-generation communication networks, Internet, or computer networks (e.g., LAN or WAN)). The above-described kinds of communication modules may be integrated in one component (e.g., a single chip) or may be implemented with a plurality of components (e.g., a plurality of chips) which are independent of each other. The wireless communication module 192 may identify or authenticate the electronic device 101 within a communication network, such as the first network 198 or the second network 199, by using subscriber information (e.g., international mobile subscriber identity (IMSI)) stored in the subscriber identification module 196.

The wireless communication module 192 may support a 5G network and a next-generation communication technology after a 4G network, for example, a new radio (NR) access technology. The NR access technology may support enhanced mobile broadband (eMBB), massive machine type communications (mMTC), or ultra-reliable and low-latency communications (URLLC). For example, the wireless communication module 192 may support a high frequency band (e.g., mmWave band) to achieve a high data transfer rate. The wireless communication module 192 may support various technologies for securing performance in a high frequency band, for example, technologies such as beamforming, massive multiple-input and multiple-output (massive MIMO), full dimensional MIMO (FD-MIMO), an array antenna, analog beam-forming, and a large scale antenna. The wireless communication module 192 may support various requirements regulated in the electronic device 101, an external electronic device (e.g., the electronic device 104) or a network system (e.g., the second network 199). According to an embodiment, the wireless communication module 192 may support peak data rate (e.g., 20 Gbps or more) for eMBB implementation, loss coverage (e.g., 164 dB or less) for mMTC implementation, or U-plane latency (e.g., downlink (DL) of 0.5 ms or less and uplink (UL) of 0.5 ms or less, or round trip of 1 ms or less) for URLLC implementation.

The antenna module 197 may transmit a signal or a power to the outside (e.g., an external electronic device) or may receive a signal or a power from the outside. According to an embodiment, the antenna module 197 may include an antenna including a radiator formed of a conductor or a conductive pattern formed on a substrate (e.g., PCB). According to one embodiment, the antenna module 197 may include a plurality of antennas (e.g., an array antenna). In this case, at least one antenna suitable for a communication scheme used in a communication network such as the first network 198 or the second network 199 may be selected, for example, by the communication module 190 from the plurality of antennas. The signal or power may be exchanged between the communication module 190 and an external electronic device through the selected at least one antenna or may be received from the external electronic device through the selected at least one antenna and the communication module 190. According to some embodiments, other parts (e.g., radio frequency integrated circuit (RFIC)) may be additionally formed as a part of the antenna module 197 in addition to the radiator.

According to various embodiments, the antenna module 197 may form an mmWave antenna module. According to an embodiment, the mmWave antenna module may include a printed circuit board (PCB), a radio frequency integrated circuit (RFIC), and a plurality of antennas (e.g., an array antenna). The RFIC may be disposed on or adjacent to a first surface (e.g., a bottom surface) of the PCB and may support a specified high frequency band (e.g., mmWave band). The plurality of antennas may be disposed on or adjacent to a second surface (e.g., a top surface or a side surface) of the PCB and may transmit or receive a signal in the specified high frequency band.

At least some of the components may be connected to each other through a communication scheme (e.g., a bus, a general purpose input and output (GPIO), a serial peripheral interface (SPI), or a mobile industry processor interface (MIPI)) between peripheral devices and may exchange signals (e.g., commands or data) with each other.

According to an embodiment, the command or data may be transmitted or received between the electronic device 101 and the external electronic device 104 through the server 108 connected to the second network 199. Each of the external electronic device 102 or 104 may be a device of which the type is the same as or different from that of the electronic device 101. According to an embodiment, all or a part of operations to be executed by the electronic device 101 may be executed in one or more external electronic devices among the external electronic devices 102, 104, or 108. For example, when the electronic device 101 needs to perform any function or service automatically or in response to a request from the user or any other device, the electronic device 101 may additionally request one or more external electronic devices to perform at least part of the function or service, instead of internally executing the function or service. The one or more external electronic devices which receive the request may execute at least a part of the function or service thus requested or an additional function or service associated with the request, and may provide a result of the execution to the electronic device 101. The electronic device 101 may process the result as it is or additionally, and may provide a result of the processing as at least a part of the response to the request. To this end, for example, cloud computing, distributed computing, mobile edge computing (MEC), or client-server computing may be used. For example, the electronic device 101 may provide an ultra-low latency service by using distributed computing or mobile edge computing. In another embodiment, the external electronic device 104 may include an Internet of Things (IoT) device. The server 108 may be an intelligent server using machine learning and/or a neural network. According to an embodiment, the external electronic device 104 or the server 108 may be included in the second network 199. The electronic device 101 may be applied to an intelligent service (e.g., a smart home, a smart city, a smart car, or a healthcare) based on 5G communication technology and loT-related technology.

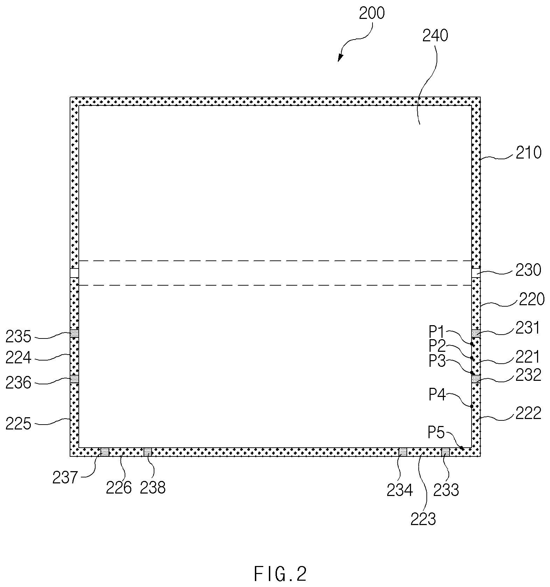

FIG. 2 is a plan view showing a front exterior appearance of an electronic device, according to an embodiment.

Referring to FIG. 2, an electronic device 200 (e.g., the electronic device 101 of FIG. 1) according to an embodiment may include first housing 210, second housing 220, a hinge part 230, and a display 240.

According to an embodiment, the first housing 210, the second housing 220, and the display 240 may at least partially define an exterior appearance of the electronic device 200. For example, the display 240 may be at least partially accommodated in the first housing 210 and the second housing 220 to form a front surface of the electronic device 200 together with the first housing 210 and the second housing 220. The first housing 210 and the second housing 220 may form a rear surface facing in the opposite direction of the front surface, and a side surface surrounding the space between the front surface and the rear surface. However, it is not limited to the example described above.

According to an embodiment, the display 240 may be visually exposed through at least part of the front surface. The display 240 may include a flexible display or a foldable display that is at least partially deformable.

According to an embodiment, the first housing 210 may be connected to the second housing 220 through the hinge part 230. For example, the first housing 210 and the second housing 220 may be pivotally coupled to each other through the hinge part 230. The first housing 210 and the second housing 220 may rotate around the hinge part 230 such that the electronic device 200 is capable of being folded or unfolded.

According to an embodiment, the second housing 220 may include a conductive portion and a non-conductive portion. The conductive portion of the second housing 220 may include a conductive material (e.g., metal). The conductive portion of the second housing 220 may include a plurality of segments. For example, the plurality of segments may include a first segment 221, a second segment 222, a third segment 223, a fourth segment 224, a fifth segment 225, and/or a sixth segment 226. According to an embodiment, the plurality of segments of the second housing 220 may operate as the antenna of the electronic device 200.

According to an embodiment, the plurality of segments may include a plurality of points P1, P2, P3, P4, and/or P5 capable of being electrically connected to at least one component of the electronic device 200. For example, the first segment 221 may include the first point P1, the second point P2, and/or the third point P3. Here, the first point P1 may be placed closer to a first gap 231 than a second gap 232; the third point P3 may be placed closer to the second gap 232 than the first gap 231; and, the second point P2 may be placed between the first point P1 and the third point P3. Moreover, the second segment 222 may include the fourth point P4 and/or the fifth point P5. Here, the fourth point P4 may be placed closer to the second gap 232 than a third gap 233, and the fifth point P5 may be placed closer to the third gap 233 than the second gap 232. According to an embodiment, the plurality of points P1, P2, P3, P4, and/or P5 may mean electrical connection points capable of being electrically connected to at least one component of the electronic device 200. For example, they may include connection points in contact with a connection member (e.g., c-clip) placed on a printed circuit board (not shown).

According to an embodiment, the non-conductive portion of the second housing 220 may include at least one gap. For example, the non-conductive portion of the second housing 220 may include the first gap 231, the second gap 232, the third gap 233, a fourth gap 234, a fifth gap 235, a sixth gap 236, a seventh gap 237, and/or an eighth gap 238. The at least one gap may include a non-conductive material. For example, the at least one gap may be at least partially filled with the non-conductive material, such as air or resin.

The at least one gap may at least partially separate a plurality of segments of the conductive portion. For example, the first segment 221 and the second segment 222 may be separated from each other by the second gap 232, and the second segment 222 and the third segment 223 may be separated from each other by the third gap 233. For example, the plurality of segments may be at least partially spaced apart from neighboring segments by at least one gap. For example, the fourth segment 224 may be at least partially spaced apart from the fifth segment 225, which is neighboring, by the sixth gap 236.

At least one gap and the plurality of segments of the second housing 220 may form at least part of a side surface of the second housing 220. Additionally or alternatively, the at least one gap and the plurality of segments of the second housing 220 may form a portion of a front surface and/or a portion of a rear surface of the second housing 220.

According to various embodiments, the at least one gap and the plurality of segments of the second housing 220 may be implemented with various lengths depending on specifications of the electronic device 200. For example, the at least one gap and the plurality of segments of the second housing 220 may be implemented with various lengths depending on various wireless communication standards and corresponding wireless communication frequency bands supported by the electronic device 200.

FIG. 2 illustrates a foldable electronic device in which the first housing 210 and the second housing 220 of the electronic device 200 are capable of being folded around the hinge part 230, but is not limited thereto. For example, the electronic device 200 may include single housing in which the first housing 210 and the second housing 220 are integrally formed, and may not include the hinge part 230. In this case, the electronic device 200 may be an electronic device including single non-foldable housing.

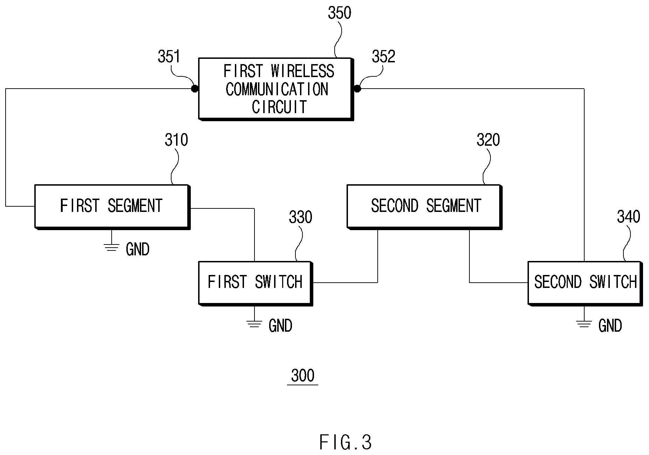

Hereinafter, an embodiment in which an electronic device 300 utilizes a first segment 310 and a second segment 320 as an antenna will be described with reference to FIGS. 3, 4, and 5.

FIG. 3 is a block diagram of an electronic device, according to an embodiment.

Referring to FIG. 3, the electronic device 300 (e.g., the electronic device 101 of FIG. 1 or the electronic device 200 of FIG. 2) may include the first segment 310 (e.g., the first segment 221 of FIG. 2), the second segment 320 (e.g., the second segment 222 of FIG. 2), a first switch 330, a second switch 340, and a first wireless communication circuit 350 (e.g., the wireless communication module 192 of FIG. 1).

According to an embodiment, the first segment 310 may be electrically connected to a first port 351 of the first wireless communication circuit 350, a ground part, and the first switch 330. For example, the first segment 310 may be electrically connected to the first port 351 of the first wireless communication circuit 350 at a first point. For example, the first point may include, but is not limited to, the first point P1 of FIG. 2. The first segment 310 may be electrically connected to the ground part at the second point. For example, the second point may include, but is not limited to, the first point P1 or the second point P2 of FIG. 2. The first segment 310 may be electrically connected to the first switch 330 at a third point. For example, the third point may include, but is not limited to, the third point P3 of FIG. 2.

According to an embodiment, the second segment 320 may be electrically connected to the first switch 330 and the second switch 340. For example, the second segment 320 may be electrically connected to the second switch 340 at the first point. For example, the first point may include, but is not limited to, the fourth point P4 of FIG. 2. The second segment 320 may be electrically connected to the first switch 330 at a second point. For example, the second point may include, but is not limited to, the fifth point P5 of FIG. 2.

According to an embodiment, the first segment 310 and/or the second segment 320 may radiate an electrical signal received from the first wireless communication circuit 350 into external space. According to an embodiment, each of the first segment 310 and the second segment 320 may have a specified length. For example, the first segment 310 and/or the second segment 320 may have a length capable of transmitting and/or receiving a wireless signal in the first frequency range. In this case, the first segment 310 and the second segment 320, which are connected to each other, may each have a length capable of transmitting and/or receiving wireless signals in a first frequency range and a second frequency range.

According to an embodiment, the first switch 330 may be electrically connected to the first segment 310, the ground part, and the second segment 320. According to an embodiment, the first switch 330 may selectively connect the second segment 320 to the first segment 310 or the ground part.

According to an embodiment, the second switch 340 may be electrically connected to the second segment 320, the ground part, and a second port 352 of the first wireless communication circuit 350. According to an embodiment, the second switch 340 may optionally connect the second segment 320 to the ground part or the second port 352 of the first wireless communication circuit 350.

According to an embodiment, the first wireless communication circuit 350 may include a wireless communication circuit for transmitting and/or receiving a wireless signal. For example, the first wireless communication circuit 350 may be configured to transmit and/or receive a wireless signal of a frequency band (e.g., a frequency band of long term evolution (LTE) and/or 5G) used for a cellular network. According to an embodiment, the first wireless communication circuit 350 may transmit and/or receive a wireless signal by using an antenna formed from the first segment 310 and/or the second segment 320.

According to an embodiment, the first wireless communication circuit 350 may include the first port 351 and/or the second port 352. According to an embodiment, the first wireless communication circuit 350 may be electrically connected to the first segment 310 through the first port 351 and may be electrically connected to the second switch 340 through the second port 352. According to an embodiment, the first wireless communication circuit 350 may transmit and/or receive wireless signals of different frequency bands through the first port 351 and the second port 352, respectively.

According to an embodiment, the first wireless communication circuit 350 is configured to operate in a first mode or a second mode. According to an embodiment, the first mode may be described as a first state, and the second mode may be described as a second state. For example, the first mode may be described as the first state in which the first wireless communication circuit 350 transmits and/or receives a wireless signal in the first frequency range, and the second mode may be described as the second state in which the first wireless communication circuit 350 transmits and/or receives a wireless signal in the first frequency range and the second frequency range.

According to an embodiment, the first mode may be configured such that the first wireless communication circuit 350 transmits and/or receives a wireless signal in a first frequency range by using a first antenna formed from the first segment 310 and a second antenna formed from the second segment 320. For example, the first wireless communication circuit 350 may transmit and/or receive a wireless signal of a first frequency band included in the first frequency range by using a first antenna formed from the first segment 310, and may transmit and/or receive a wireless signal of a second frequency band included in the first frequency range by using a second antenna formed from the second segment 320. Here, the first frequency band and the second frequency band included in the first frequency range may be frequency bands the same as each other or frequency bands different from each other.

According to an embodiment, the second mode may be configured such that the first wireless communication circuit 350 transmits and/or receives wireless signals in the first frequency range and the second frequency range by using a third antenna formed by electrically connecting the first segment 310 and the second segment 320. For example, the first wireless communication circuit 350 may transmit and/or receive a wireless signal of the first frequency band included in the first frequency range, the second frequency band included in the first frequency range, or a third frequency band included in the second frequency range by using the third antenna.

For example, the first frequency range may include the first frequency band (e.g., a mid frequency band of about 1.8 GHz to about 2.2 GHz, mid band) and a second frequency band (e.g., a high frequency band of about 2.3 GHz to about 2.7 GHz, high band). The second frequency range may include the third frequency band (e.g., a low frequency band of about 0.7 GHz to about 1.0 GHz). The third frequency band may be lower than the first frequency band and the second frequency band. For example, the center frequency corresponding to the third frequency band may be lower than center frequencies corresponding to the first frequency band and the second frequency band. The first frequency band may be lower than the second frequency band. For example, the center frequency corresponding to the first frequency band may be lower than the center frequency corresponding to the second frequency band.

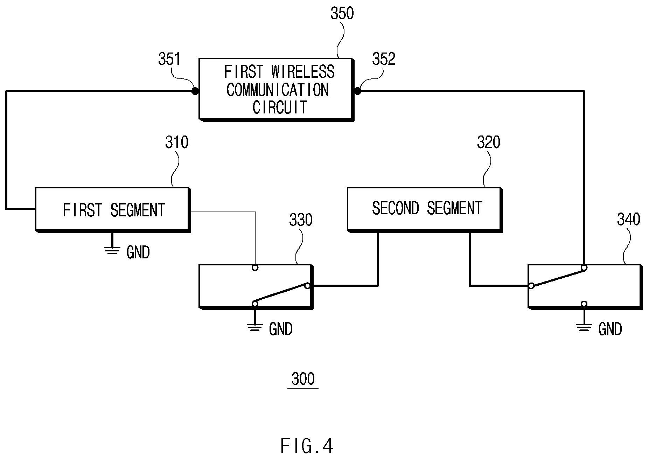

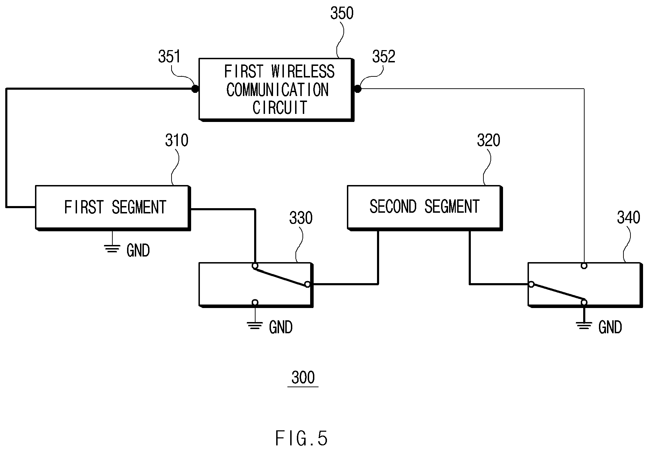

The first mode and the second mode in which the first wireless communication circuit 350 is configured to operate may be respectively described in detail with reference to FIGS. 4 and 5, which will be described later.

In this specification, redundant descriptions associated with components having the same reference numerals will be omitted.

FIG. 4 is a block diagram showing a connection relationship between components when a first wireless communication circuit of an electronic device operates in a first mode, according to an embodiment.

Referring to FIG. 4, the first port 351 of the first wireless communication circuit 350 may be electrically connected to the first segment 310. The first segment 310 may be electrically connected to the first port 351 of the first wireless communication circuit 350 at the first point, and may be electrically connected to a ground part at a second point. The first segment 310 may not be electrically connected to the second segment 320. The first segment 310 may be electrically open to the second segment 320. The second port 352 of the first wireless communication circuit 350 may be electrically connected to the second segment 320 through the second switch 340. The second segment 320 may be electrically connected to the second port 352 through the second switch 340 at the first point, and may be electrically connected to the ground part through the first switch 330 at the second point.

According to an embodiment, the first switch 330 may electrically connect the second segment 320 to the ground part, not the first segment 310. According to an embodiment, the second switch 340 may electrically connect the second segment 320 to the second port 352 of the first wireless communication circuit 350, not the ground part.

According to an embodiment, the electronic device 300 may include a first antenna. The first antenna may be at least partially formed from the first segment 310 that is electrically open to the second segment 320 through the first switch 330. The first wireless communication circuit 350 may transmit and/or receive a wireless signal in a first frequency range by using the first antenna. For example, the first wireless communication circuit 350 may transmit and/or receive a wireless signal of a first frequency band included in the first frequency range by using the first antenna.

According to an embodiment, the electronic device 300 may include a second antenna. The second antenna may be at least partially formed by the second segment 320 that is electrically open to the first segment 310 through the first switch 330. The first wireless communication circuit 350 may transmit and/or receive a wireless signal in the first frequency range by using the second antenna. For example, the first wireless communication circuit 350 may transmit and/or receive a wireless signal of a second frequency band, which is included in the first frequency range, by using the second antenna.

FIG. 5 is a block diagram showing a connection relationship between components when a first wireless communication circuit of an electronic device operates in a second mode, according to an embodiment.

Referring to FIG. 5, the first segment 310 and the second segment 320 may be electrically connected to each other through the first switch 330. For example, the third point of the first segment 310 and the second point of the second segment 320 may be electrically connected to each other through the first switch 330. The first wireless communication circuit 350 is electrically connected to the first segment 310 through the first port 351, thereby being electrically connected to the first segment 310 and the second segment 320. The second segment 320 may not be electrically connected to the second port 352 of the first wireless communication circuit 350. The second segment 320 may be electrically open to the second port 352 of the first wireless communication circuit 350. The second segment 320 may be electrically connected to the ground part at the first point through the second switch 340.

According to an embodiment, the first switch 330 may electrically connect the second segment 320 to the first segment 310, not the ground part. According to an embodiment, the second switch 340 may electrically connect the second segment 320 to the ground part, not the second port 352 of the first wireless communication circuit 350.

According to an embodiment, the electronic device 300 may include a third antenna. The third antenna may be at least partially formed from the first segment 310 being electrically connected to the second segment 320 through the first switch 330, and the second segment 320 being electrically open to the second port 352 of the first wireless communication circuit 350 through the second switch 340. The first wireless communication circuit 350 may transmit and/or receive a wireless signal in the first frequency range and the second frequency range by using the third antenna. For example, the first wireless communication circuit 350 may transmit and/or receive a wireless signal of a first frequency band included in the first frequency range, the second frequency band included in the first frequency range, or the third frequency band included in the second frequency range by using the third antenna.

According to an embodiment, the electronic device 300 may control the first switch 330 and the second switch 340 such that the first wireless communication circuit 350 operates in the first mode when transmitting and/or receiving a wireless signal in the first frequency range. According to an embodiment, the electronic device 300 may control the first switch 330 and the second switch 340 such that the first wireless communication circuit 350 operates in the second mode when transmitting and/or receiving a wireless signal in the second frequency range.

The electronic device 300 according to an embodiment may include at least one processor (e.g., the processor 120 of FIG. 1) configured to control the first wireless communication circuit 350, the first switch 330, and the second switch 340. The at least one processor may be implemented separately from the first wireless communication circuit 350, or may be integrated with the first wireless communication circuit 350.

As described above, the electronic device 300 may expand the frequency band of a wireless signal that is capable of being transmitted and/or received by using the plurality of segments 310 and 320 connected to a plurality of ports of the first wireless communication circuit 350.

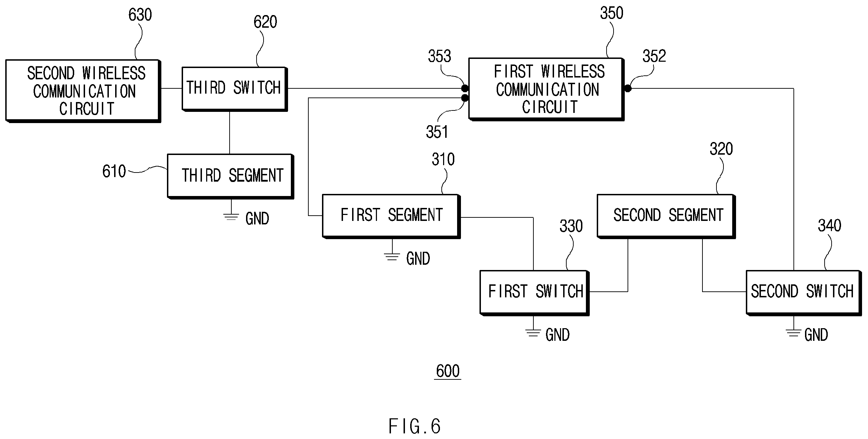

FIG. 6 is a block diagram of an electronic device, according to an embodiment.

Referring to FIG. 6, an electronic device 600 (e.g., the electronic device 101 in FIG. 1, the electronic device 200 in FIG. 2, or the electronic device 300 in FIG. 3) includes the first segment 310, the second segment 320, a third segment 610 (e.g., the third segment 223 in FIG. 2), the first switch 330, the second switch 340, a third switch 620, the first wireless communication circuit 350, and/or a second wireless communication circuit 630 (e.g., the wireless communication module 192 in FIG. 1).

According to an embodiment, the third segment 610 is electrically connected to the third switch 620 and a ground part. For example, the third segment 610 is electrically connected to the third switch 620 at a first point. The third segment 610 is electrically connected to the ground part at a second point.

According to an embodiment, the third segment 610 radiates an electrical signal received from the first wireless communication circuit 350 or the second wireless communication circuit 630 into external space. According to an embodiment, the third segment 610 may have a specified length. For example, the third segment 610 may have a length capable of transmitting and/or receiving wireless signals in a first frequency range and a third frequency range. Here, the third frequency range may include a frequency band used for WiFi communication.

According to an embodiment, the third switch 620 is electrically connected to a third port 353 of the first wireless communication circuit 350, the third segment 610, and the second wireless communication circuit 630. According to an embodiment, the third switch 620 may selectively connect the third segment 610 to the third port 353 of the first wireless communication circuit 350 or the second wireless communication circuit 630.

According to an embodiment, the first wireless communication circuit 350 transmits and/or receives a wireless signal by using an antenna formed from the first segment 310, the second segment 320, and/or the third segment 610.

According to an embodiment, the first wireless communication circuit 350 includes the first port 351, the second port 352, and/or the third port 353. According to an embodiment, the first wireless communication circuit 350 may be electrically connected to the first segment 310 through the first port 351, may be electrically connected to the second switch 340 through the second port 352, and may be electrically connected to the third switch 620 through the third port 353. According to an embodiment, the first wireless communication circuit 350 transmits and/or receives wireless signals of different frequency bands through the first port 351, the second port 352, and the third port 353, respectively.

According to an embodiment, the first wireless communication circuit 350 may be configured to operate in a first mode, a second mode, or a third mode. According to an embodiment, the first mode may be described as a first state, the second mode may be described as a second state, and the third mode may be described as a third state. For example, the first mode may be described as the first state in which the first wireless communication circuit 350 transmits and/or receives a wireless signal in the first frequency range; the second mode may be described as the second state in which the first wireless communication circuit 350 transmits and/or receives a wireless signal in the first frequency range and the second frequency range; and, the third mode may be described as the third state in which the first wireless communication circuit 350 transmits and/or receives a wireless signal in the first frequency range by using a plurality of antennas.

According to an embodiment, the third mode may be configured such that the first wireless communication circuit 350 transmits and/or receives wireless signals in the first frequency range and the second frequency range by using a third antenna formed by electrically connecting the first segment 310 and the second segment 320, and transmits and/or receives a wireless signal in the first frequency range by using a fourth antenna formed from the third segment 610. For example, the first wireless communication circuit 350 may transmit and/or receive a wireless signal of the first frequency band included in the first frequency range, the second frequency band included in the first frequency range, or a third frequency band included in the second frequency range by using the third antenna. Furthermore, the first wireless communication circuit 350 may transmit and/or receive a wireless signal of a first frequency band and a second frequency band, which are included in the first frequency range, by using the fourth antenna.

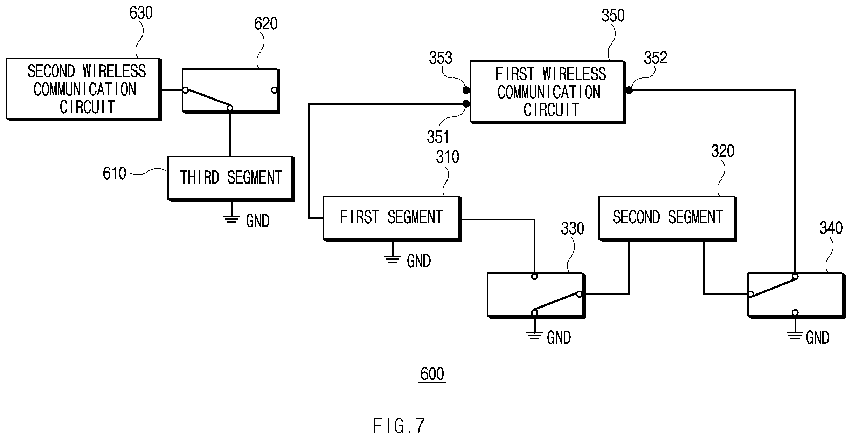

The first mode, the second mode, and the third mode in which the first wireless communication circuit 350 is configured to operate may be respectively described in detail with reference to FIGS. 7, 8, and 9, which will be described later.

According to an embodiment, the second wireless communication circuit 630 may be a wireless communication circuit for transmitting and/or receiving a wireless signal. For example, the second wireless communication circuit 630 may generate a wireless signal of a frequency band (e.g., a frequency band of LTE and/or 5G) used for cellular networks and/or a frequency band used for WiFi networks. According to an embodiment, the second wireless communication circuit 630 may transmit and/or receive a wireless signal by using an antenna formed from the third segment 610.

According to an embodiment, the second wireless communication circuit 630 may be electrically connected to the third switch 620. According to an embodiment, when the first wireless communication circuit 350 operates in the first mode or the second mode, the second wireless communication circuit 630 may be electrically connected to the third segment 610 via the third switch 620. In this case, the second wireless communication circuit 630 may transmit and/or receive a wireless signal in a third frequency range by using an antenna formed from the third segment 610. For example, the third frequency range may include a frequency band used for WiFi networks.

In this specification, redundant descriptions associated with components having the same reference numerals will be omitted.

FIG. 7 is a block diagram showing a connection relationship between components when a first wireless communication circuit of an electronic device operates in a first mode, according to an embodiment.

Referring to FIG. 7, the first port 351 of the first wireless communication circuit 350 may be electrically connected to the first segment 310. The first segment 310 may be electrically connected to the first port 351 of the first wireless communication circuit 350 at the first point, and may be electrically connected to a ground part at a second point. The first segment 310 may not be electrically connected to the second segment 320. The first segment 310 may be electrically open to the second segment 320. The second port 352 of the first wireless communication circuit 350 may be electrically connected to the second segment 320 through the second switch 340. The second segment 320 may be electrically connected to the second port 352 through the second switch 340 at the first point, and may be electrically connected to the ground part through the first switch 330 at the second point. The second wireless communication circuit 630 may be electrically connected to the third segment 610 through the third switch 620. The third segment 610 may be electrically connected to the third switch 620 at the first point and may be electrically connected to the ground part at the second point.

According to an embodiment, the first switch 330 may electrically connect the second segment 320 to the ground part, not the first segment 310. According to an embodiment, the second switch 340 may electrically connect the second segment 320 to the second port 352 of the first wireless communication circuit 350, not the ground part. According to an embodiment, the third switch 620 may electrically connect the third segment 610 to the second wireless communication circuit 630, not the third port 353 of the first wireless communication circuit 350.

According to an embodiment, the electronic device 600 includes a first antenna. The first antenna may be at least partially formed from the first segment 310 that is electrically open to the second segment 320 through the first switch 330. The first wireless communication circuit 350 may transmit and/or receive a wireless signal in a first frequency range by using the first antenna. For example, the first wireless communication circuit 350 may transmit and/or receive a wireless signal of a first frequency band included in the first frequency range by using the first antenna.

According to an embodiment, the electronic device 600 includes a second antenna. The second antenna may be at least partially formed by the second segment 320 that is electrically open to the first segment 310 through the first switch 330. The first wireless communication circuit 350 may transmit and/or receive a wireless signal in the first frequency range by using the second antenna. For example, the first wireless communication circuit 350 may transmit and/or receive a wireless signal of a second frequency band, which is included in the first frequency range, by using the second antenna.

According to an embodiment, the electronic device 600 may include a fifth antenna. The fifth antenna may be at least partially formed by the third segment 610 electrically connected through the third switch 620. The second wireless communication circuit 630 may transmit and/or receive a wireless signal in a third frequency range by using the fifth antenna. For example, the second wireless communication circuit 630 may transmit and/or receive a wireless signal of a fourth frequency band included in a third frequency range by using the fifth antenna.

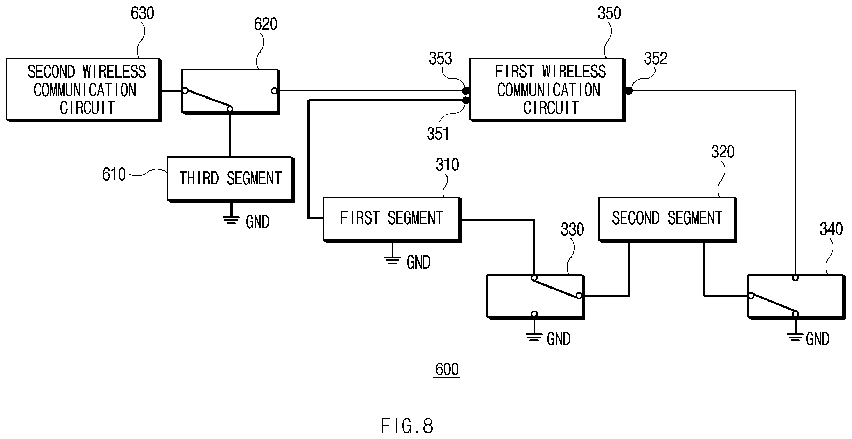

FIG. 8 is a block diagram showing a connection relationship between components when a first wireless communication circuit of an electronic device operates in a second mode, according to an embodiment.

Referring to FIG. 8, the first segment 310 and the second segment 320 may be electrically connected to each other through the first switch 330. For example, the third point of the first segment 310 and the second point of the second segment 320 may be electrically connected to each other through the first switch 330. The first wireless communication circuit 350 is electrically connected to the first segment 310 through the first port 351, thereby being electrically connected to the first segment 310 and the second segment 320. The second segment 320 may not be electrically connected to the second port 352 of the first wireless communication circuit 350. The second segment 320 may be electrically open to the second port 352 of the first wireless communication circuit 350. The second segment 320 may be electrically connected to the ground part at the first point through the second switch 340. The second wireless communication circuit 630 may be electrically connected to the third segment 610 through the third switch 620. The third segment 610 may be electrically connected to the third switch 620 at the first point and may be electrically connected to the ground part at the second point.

According to an embodiment, the first switch 330 may electrically connect the second segment 320 to the first segment 310, not the ground part. According to an embodiment, the second switch 340 may electrically connect the second segment 320 to a ground part, not the second port 352 of the first wireless communication circuit 350. According to an embodiment, the third switch 620 may electrically connect the third segment 610 to the second wireless communication circuit 630, not the third port 353 of the first wireless communication circuit 350.

According to an embodiment, the electronic device 600 may include a third antenna. The third antenna may be at least partially formed from the first segment 310 being electrically connected to the second segment 320 through the first switch 330, and the second segment 320 being electrically open to the second port 352 of the first wireless communication circuit 350 through the second switch 340. The first wireless communication circuit 350 may transmit and/or receive a wireless signal in the first frequency range and the second frequency range by using the third antenna. For example, the first wireless communication circuit 350 may transmit and/or receive a wireless signal of a first frequency band included in the first frequency range, the second frequency band included in the first frequency range, or the third frequency band included in the second frequency range by using the third antenna.

According to an embodiment, the electronic device 600 may include a fifth antenna. The fifth antenna may be at least partially formed by the third segment 610 electrically connected through the third switch 620. The second wireless communication circuit 630 may transmit and/or receive a wireless signal in a third frequency range by using the fifth antenna. For example, the second wireless communication circuit 630 may transmit and/or receive a wireless signal of a fourth frequency band included in a third frequency range by using the fifth antenna.

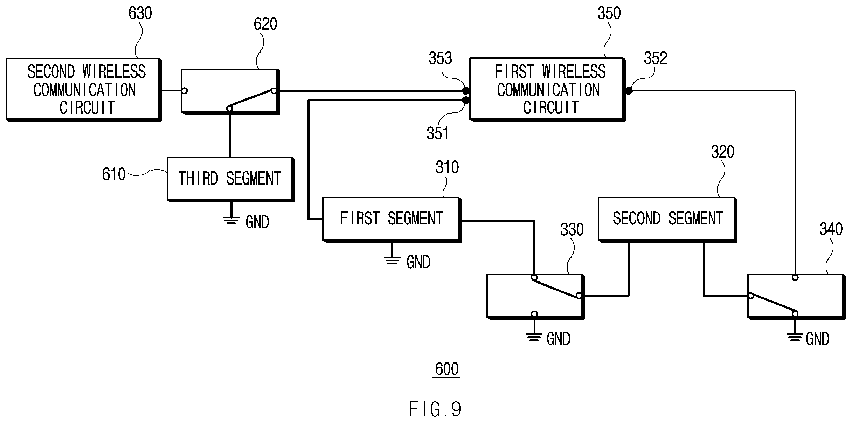

FIG. 9 is a block diagram showing a connection relationship between components when a first wireless communication circuit of an electronic device operates in a third mode, according to an embodiment.

Referring to FIG. 9, the first segment 310 and the second segment 320 may be electrically connected to each other through the first switch 330. For example, the third point of the first segment 310 and the second point of the second segment 320 may be electrically connected to each other through the first switch 330. The first wireless communication circuit 350 is electrically connected to the first segment 310 through the first port 351, thereby being electrically connected to the first segment 310 and the second segment 320. The second segment 320 may not be electrically connected to the second port 352 of the first wireless communication circuit 350. The second segment 320 may be electrically open to the second port 352 of the first wireless communication circuit 350. The second segment 320 may be electrically connected to the ground part at the first point through the second switch 340. The third port 353 of the first wireless communication circuit 350 may be electrically connected to the third segment 610 through the third switch 620.

According to an embodiment, the first switch 330 may electrically connect the second segment 320 to the first segment 310, not the ground part. According to an embodiment, the second switch 340 may electrically connect the second segment 320 to a ground part, not the second port 352 of the first wireless communication circuit 350. According to an embodiment, the third switch 620 may electrically connect the third segment 610 to the third port 353 of the first wireless communication circuit 350, not the second wireless communication circuit 630.

According to an embodiment, the electronic device 600 may include a third antenna. The third antenna may be at least partially formed from the first segment 310 being electrically connected to the second segment 320 through the first switch 330, and the second segment 320 being electrically open to the second port 352 of the first wireless communication circuit 350 through the second switch 340. The first wireless communication circuit 350 may transmit and/or receive a wireless signal in the first frequency range and the second frequency range by using the third antenna. For example, the first wireless communication circuit 350 may transmit and/or receive a wireless signal of a first frequency band included in the first frequency range, the second frequency band included in the first frequency range, or the third frequency band included in the second frequency range by using the third antenna.

According to an embodiment, the electronic device 600 may include a fourth antenna. The fourth antenna may be at least partially formed from the third segment 610 electrically connected to the third port 353 of the first wireless communication circuit 350 through the third switch 620. The first wireless communication circuit 350 may transmit and/or receive a wireless signal in the first frequency range by using the fourth antenna. For example, the first wireless communication circuit 350 may transmit and/or receive a wireless signal of a first frequency band and a second frequency band, which are included in the first frequency range, by using the fourth antenna.

According to an embodiment, the electronic device 600 may control the first switch 330, the second switch 340, and the third switch 620 such that the first wireless communication circuit 350 operates in the first mode when transmitting and/or receiving a wireless signal in the first frequency range. According to an embodiment, the electronic device 600 may control the first switch 330, the second switch 340, and the third switch 620 such that the first wireless communication circuit 350 operates in the second mode when transmitting and/or receiving a wireless signal in the second frequency range. According to an embodiment, when the electronic device 600 performs carrier aggregation (CA) including a wireless signal of the second frequency range, the electronic device 600 may control the first switch 330, the second switch 340, and the third switch 620 such that the first wireless communication circuit 350 is capable of operating in a third mode.

As described above, the electronic device 600 may expand the frequency band of a wireless signal that is capable of being transmitted and/or received by using the plurality of segments 310, 320, and 610 connected to a plurality of ports of the first wireless communication circuit 350.

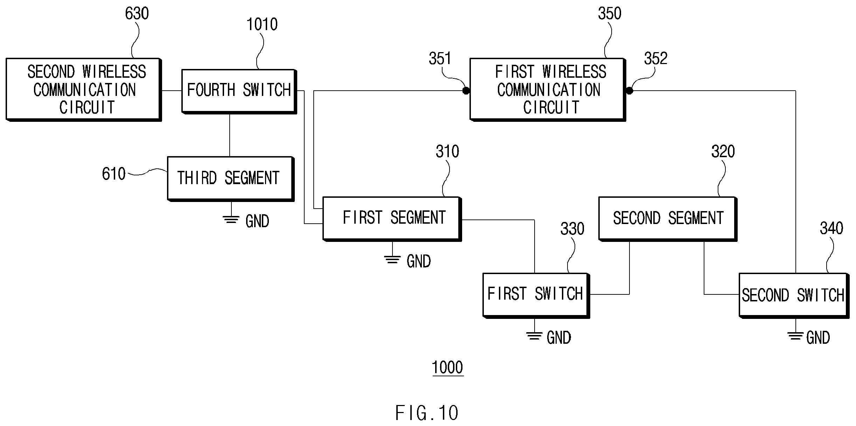

FIG. 10 is a block diagram of an electronic device, according to an embodiment.

Referring to FIG. 10, an electronic device 1000 (e.g., the electronic device 101 in FIG. 1, the electronic device 200 in FIG. 2, or the electronic device 300 in FIG. 3) may include the first segment 310, the second segment 320, the third segment 610, the first switch 330, the second switch 340, a fourth switch 1010, the first wireless communication circuit 350, and the second wireless communication circuit 630.

According to an embodiment, the third segment 610 may be electrically connected to the fourth switch 1010 and a ground part.

According to an embodiment, the third segment 610 may radiate an electrical signal received from the first wireless communication circuit 350 or the second wireless communication circuit 630 into external space. According to an embodiment, the third segment 610 may have a specified length. For example, the third segment 610 may have a length capable of transmitting and/or receiving wireless signals in a first frequency range and a third frequency range. Here, the third frequency range may include a frequency band used for WiFi communication.

According to an embodiment, the fourth switch 1010 may be electrically connected to the first segment 310, the third segment 610, and/or the second wireless communication circuit 630. According to an embodiment, the fourth switch 1010 may selectively connect the third segment 610 to the first segment 310 or the second wireless communication circuit 630.

According to an embodiment, the first wireless communication circuit 350 may transmit and/or receive a wireless signal by using an antenna formed from the first segment 310, the second segment 320, and/or the third segment 610.

According to an embodiment, the first wireless communication circuit 350 may include the first port 351 and/or the second port 352. According to an embodiment, the first wireless communication circuit 350 may be electrically connected to the first segment 310 through the first port 351 and may be electrically connected to the second switch 340 through the second port 352. According to an embodiment, the first wireless communication circuit 350 may transmit and/or receive wireless signals of different frequency bands through the first port 351 and the second port 352, respectively.

According to an embodiment, the first wireless communication circuit 350 may be configured to operate in a first mode, a second mode, or a fourth mode.

According to an embodiment, the fourth mode may be configured such that the first wireless communication circuit 350 transmits and/or receives wireless signals in the first frequency range and the second frequency range by using a sixth antenna formed by electrically connecting the first segment 310 and the third segment 610, and transmits and/or receives a wireless signal in the first frequency range by using a second antenna formed from the second segment 320. For example, the first wireless communication circuit 350 may transmit and/or receive a wireless signal of the first frequency band included in the first frequency range, the second frequency band included in the first frequency range, or a third frequency band included in the second frequency range by using the sixth antenna. Furthermore, the first wireless communication circuit 350 may transmit and/or receive a wireless signal of a first frequency band and a second frequency band, which are included in the first frequency range, by using the second antenna.

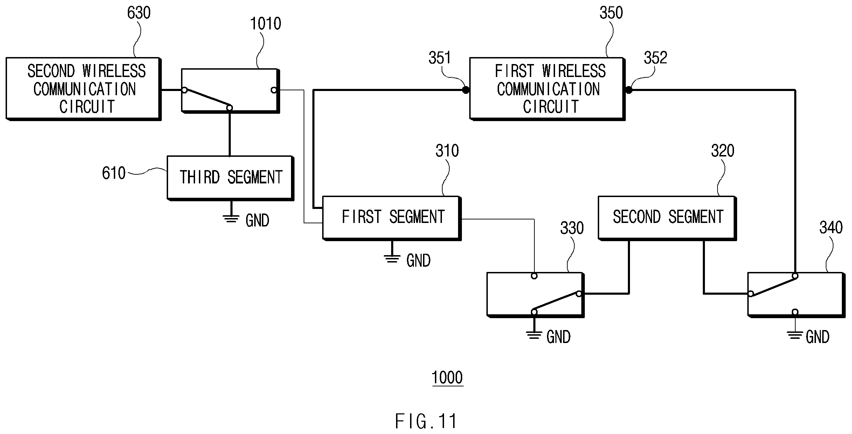

The first mode, the second mode, and the fourth mode in which the first wireless communication circuit 350 is configured to operate may be respectively described in detail with reference to FIGS. 11, 12, and 13, which will be described later.

According to an embodiment, the second wireless communication circuit 630 may be a wireless communication circuit for transmitting and/or receiving a wireless signal. For example, the second wireless communication circuit 630 may generate a wireless signal of a frequency band (e.g., a frequency band of LTE and/or 5G) used for cellular networks and/or a frequency band used for WiFi networks. According to an embodiment, the second wireless communication circuit 630 may transmit and/or receive a wireless signal by using an antenna formed from the third segment 610.

According to an embodiment, the second wireless communication circuit 630 may be electrically connected to the fourth switch 1010. According to an embodiment, when the first wireless communication circuit 350 operates in the first mode or the second mode, the second wireless communication circuit 630 may be electrically connected to the third segment 610 via the fourth switch 1010. In this case, the second wireless communication circuit 630 may transmit and/or receive a wireless signal in a third frequency range by using an antenna formed from the third segment 610. For example, the third frequency range may include a frequency band used for WiFi networks.

FIG. 11 is a block diagram showing a connection relationship between components when a first wireless communication circuit of an electronic device operates in a first mode, according to an embodiment.

Referring to FIG. 11, the first port 351 of the first wireless communication circuit 350 may be electrically connected to the first segment 310. The first segment 310 may be electrically connected to the first port 351 of the first wireless communication circuit 350 at the first point, and may be electrically connected to a ground part at a second point. The first segment 310 may not be electrically connected to the second segment 320. The first segment 310 may be electrically open to the second segment 320. The second port 352 of the first wireless communication circuit 350 may be electrically connected to the second segment 320 through the second switch 340. The second segment 320 may be electrically connected to the second port 352 through the second switch 340 at the first point, and may be electrically connected to the ground part through the first switch 330 at the second point. The second wireless communication circuit 630 may be electrically connected to the third segment 610 through the fourth switch 1010. The third segment 610 may be electrically connected to the fourth switch 1010 at the first point and may be electrically connected to the ground part at the second point.

According to an embodiment, the first switch 330 may electrically connect the second segment 320 to the ground part, not the first segment 310. According to an embodiment, the second switch 340 may electrically connect the second segment 320 to the second port 352 of the first wireless communication circuit 350, not the ground part. According to an embodiment, the fourth switch 1010 may electrically connect the third segment 610 to the second wireless communication circuit 630, not the first segment 310.

According to an embodiment, the electronic device 1000 may include a first antenna. The first antenna may be at least partially formed from the first segment 310 that is electrically open to the second segment 320 through the first switch 330. The first wireless communication circuit 350 may transmit and/or receive a wireless signal in a first frequency range by using the first antenna. For example, the first wireless communication circuit 350 may transmit and/or receive a wireless signal of a first frequency band included in the first frequency range by using the first antenna.

According to an embodiment, the electronic device 1000 may include a second antenna. The second antenna may be at least partially formed by the second segment 320 that is electrically open to the first segment 310 through the first switch 330. The first wireless communication circuit 350 may transmit and/or receive a wireless signal in the first frequency range by using the second antenna. For example, the first wireless communication circuit 350 may transmit and/or receive a wireless signal of a second frequency band, which is included in the first frequency range, by using the second antenna.

According to an embodiment, the electronic device 1000 may include a fifth antenna. The fifth antenna may be at least partially formed by the third segment 610 electrically connected through the fourth switch 1010. The second wireless communication circuit 630 may transmit and/or receive a wireless signal in a third frequency range by using the fifth antenna. For example, the second wireless communication circuit 630 may transmit and/or receive a wireless signal of a fourth frequency band included in a third frequency range by using the fifth antenna.

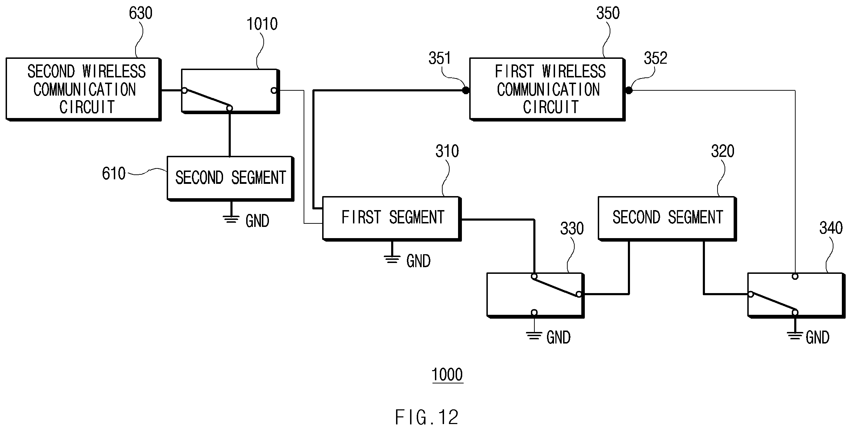

FIG. 12 is a block diagram showing a connection relationship between components when a first wireless communication circuit of an electronic device operates in a second mode, according to an embodiment.

Referring to FIG. 12, the first segment 310 and the second segment 320 may be electrically connected to each other through the first switch 330. For example, the third point of the first segment 310 and the second point of the second segment 320 may be electrically connected to each other through the first switch 330. The first wireless communication circuit 350 is electrically connected to the first segment 310 through the first port 351, thereby being electrically connected to the first segment 310 and the second segment 320. The second segment 320 may not be electrically connected to the second port 352 of the first wireless communication circuit 350. The second segment 320 may be electrically open to the second port 352 of the first wireless communication circuit 350. The second segment 320 may be electrically connected to the ground part at the first point through the second switch 340. The second wireless communication circuit 630 may be electrically connected to the third segment 610 through the fourth switch 1010. The third segment 610 may be electrically connected to the fourth switch 1010 at the first point and may be electrically connected to the ground part at the second point.

According to an embodiment, the first switch 330 may electrically connect the second segment 320 to the first segment 310, not the ground part. According to an embodiment, the second switch 340 may electrically connect the second segment 320 to a ground part, not the second port 352 of the first wireless communication circuit 350. According to an embodiment, the fourth switch 1010 may electrically connect the third segment 610 to the second wireless communication circuit 630, not the first segment 310.

According to an embodiment, the electronic device 1000 may include a third antenna. The third antenna may be at least partially formed from the first segment 310 being electrically connected to the second segment 320 through the first switch 330, and the second segment 320 being electrically open to the second port 352 of the first wireless communication circuit 350 through the second switch 340. The first wireless communication circuit 350 may transmit and/or receive a wireless signal in the first frequency range and the second frequency range by using the third antenna. For example, the first wireless communication circuit 350 may transmit and/or receive a wireless signal of a first frequency band included in the first frequency range, the second frequency band included in the first frequency range, or the third frequency band included in the second frequency range by using the third antenna.

According to an embodiment, the electronic device 1000 may include a fifth antenna. The fifth antenna may be at least partially formed by the third segment 610 electrically connected through the fourth switch 1010. The second wireless communication circuit 630 may transmit and/or receive a wireless signal in a third frequency range by using the fifth antenna. For example, the second wireless communication circuit 630 may transmit and/or receive a wireless signal of a fourth frequency band included in a third frequency range by using the fifth antenna.

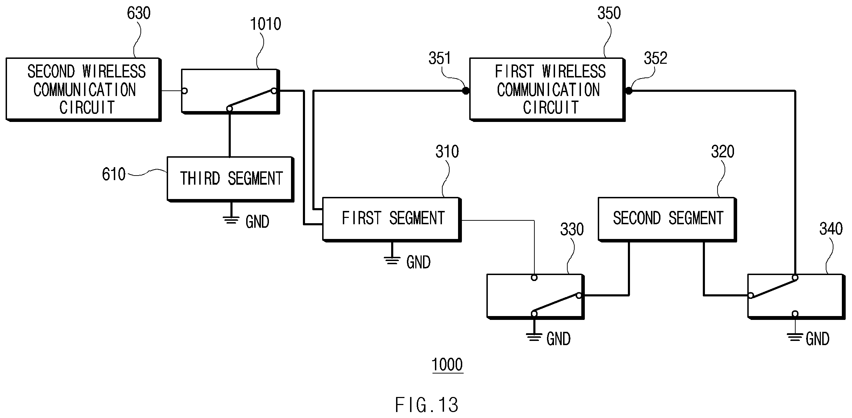

FIG. 13 is a block diagram showing a connection relationship between segments when a first wireless communication circuit of an electronic device operates in a fourth mode, according to an embodiment.

Referring to FIG. 13, the first segment 310 and the third segment 610 may be electrically connected to each other through the fourth switch 1010. The first wireless communication circuit 350 is electrically connected to the first segment 310 through the first port 351, thereby being electrically connected to the first segment 310 and the third segment 610. The second port 352 of the first wireless communication circuit 350 may be electrically connected to the second segment 320 through the second switch 340. The second segment 320 may be electrically connected to the second port 352 through the second switch 340 at the first point, and may be electrically connected to the ground part through the first switch 330 at the second point.

According to an embodiment, the first switch 330 may electrically connect the second segment 320 to the ground part, not the first segment 310. According to an embodiment, the second switch 340 may electrically connect the second segment 320 to the second port 352 of the first wireless communication circuit 350, not the ground part. According to an embodiment, the fourth switch 1010 may electrically connect the third segment 610 to the first segment 310, not the second wireless communication circuit 630.

According to an embodiment, the electronic device 1000 may include a sixth antenna. The sixth antenna may be at least partially formed from the first segment 310 being electrically connected to the third segment 610 through the fourth switch 1010, and the third segment 610 being electrically open to the second wireless communication circuit 630 through the fourth switch 1010. The first wireless communication circuit 350 may transmit and/or receive a wireless signal in the first frequency range and the second frequency range by using the sixth antenna. For example, the first wireless communication circuit 350 may transmit and/or receive a wireless signal of a first frequency band included in the first frequency range, the second frequency band included in the first frequency range, or the third frequency band included in the second frequency range by using the sixth antenna.

According to an embodiment, the electronic device 1000 may include a second antenna. The second antenna may be at least partially formed by the second segment 320 that is electrically open to the first segment 310 through the first switch 330. The first wireless communication circuit 350 may transmit and/or receive a wireless signal in the first frequency range by using the second antenna. For example, the first wireless communication circuit 350 may transmit and/or receive a wireless signal of a second frequency band, which is included in the first frequency range, by using the second antenna.

According to an embodiment, the electronic device 1000 may control the first switch 330, the second switch 340, and the fourth switch 1010 such that the first wireless communication circuit 350 operates in the first mode when transmitting and/or receiving a wireless signal in the first frequency range. According to an embodiment, the electronic device 1000 may control the first switch 330, the second switch 340, and the fourth switch 1010 such that the first wireless communication circuit 350 operates in the second mode when transmitting and/or receiving a wireless signal in the second frequency range. According to an embodiment, when the electronic device 1000 performs carrier aggregation (CA) including a wireless signal of the second frequency range, the electronic device 600 may control the first switch 330, the second switch 340, and the fourth switch 1010 such that the first wireless communication circuit 350 is capable of operating in a fourth mode.

As described above, the electronic device 1000 may expand the frequency band of a wireless signal that is capable of being transmitted and/or received by using the plurality of segments 310, 320, and 610 connected to a plurality of ports of the first wireless communication circuit 350.

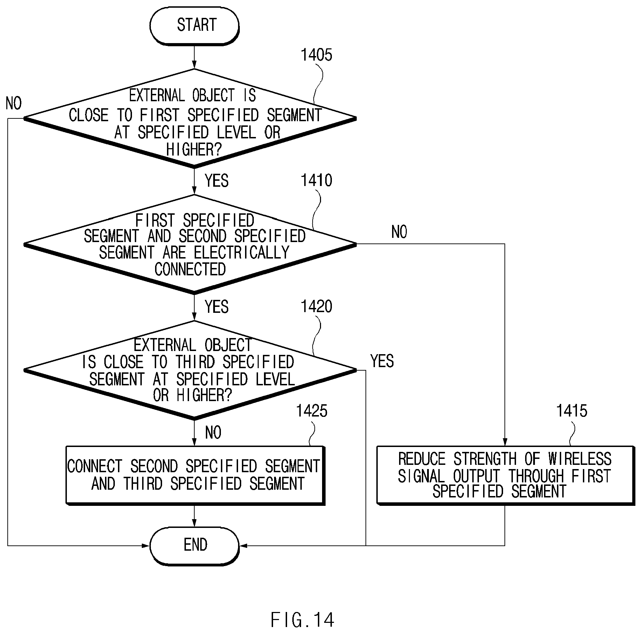

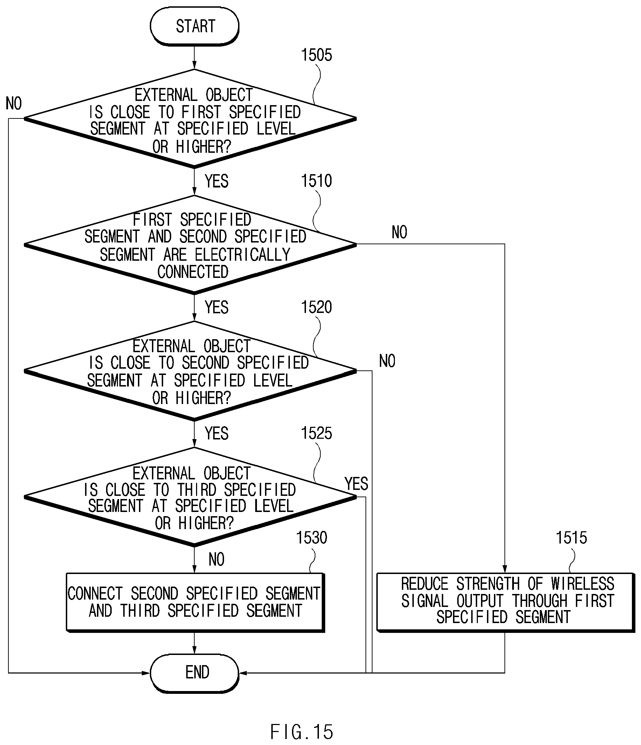

Hereinafter, an embodiment, in which an electronic device (e.g., the electronic device 101 of FIG. 1, the electronic device 200 of FIG. 2, the electronic device 300 of FIG. 3, the electronic device 600 of FIG. 6, or the electronic device 1000 of FIG. 10) changes a connection relationship between a plurality of segments based on whether an external object is in proximity, is described with reference to FIGS. 14 and 15. Operations of FIG. 14 may be performed sequentially or substantially at the same time. Operations of FIG. 15 may be performed sequentially or substantially at the same time. According to an embodiment, the order of operations in FIGS. 14 and 15 may be changed. For example, the order of operations 1405, 1410, and/or 1420 in FIG. 14 may be changed. For example, in FIG. 14, operation 1405 may be performed after operation 1410 or simultaneously with operation 1410. For example, the order of operations 1505, 1510, 1520, and/or 1525 in FIG. 15 may be changed. For example, in FIG. 15, operation 1510 may be performed after operation 1505 or simultaneously with operation 1505.

FIG. 14 is a flowchart of an operation of an electronic device, according to an embodiment.

According to an embodiment, it may be understood that operations 1405 to 1425 are performed by a processor (e.g., the processor 120 of FIG. 1) of an electronic device.

Referring to FIG. 14, in operation 1405, the electronic device may determine whether an external object (e.g., a human body or an object) is close to a first specified segment at a specified level or higher. According to an embodiment, the first specified segment may be one of a plurality of segments (e.g., the plurality of segments 221, 222, 223, 224, 225, and/or 226 of FIG. 2) included in housing (e.g., the second housing 220 of FIG. 2) of the electronic device. According to an embodiment, the electronic device may perform wireless communication by using the first specified segment as an antenna.

According to an embodiment, the electronic device may determine whether the external object is close to the first specified segment at a specified level or higher, through a proximity sensor (e.g., the sensor module 176 of FIG. 1). According to an embodiment, the proximity sensor may generate a sensing signal for determining whether the external object is in proximity. The proximity sensor may generate the sensing signal for determining whether the external object is in proximity, through an electrode. According to an embodiment, the first specified segment may operate as the electrode, which is used by the proximity sensor to detect the proximity of the external object. According to an embodiment, the proximity sensor may generate the sensing signal indicating the capacitance of the first specified segment changing due to the external object. The electronic device may determine whether the external object is in proximity, based on the sensing signal generated by the proximity sensor. For example, when a capacitance change amount of the first specified segment is greater than or equal to a specified value, the electronic device may identify that the external object is close to the first specified segment at the specified level or higher.

When it is identified in operation 1405 that the external object is not close to the first specified segment at the specified level or higher ('NO'), the electronic device may terminate the operation according to FIG. 14.

When it is identified in operation 1405 that the external object is close to the first specified segment at the specified level or higher ('YES'), in operation 1410, the electronic device may determine whether the first specified segment and a second specified segment are electrically connected to each other. According to an embodiment, the second specified segment may be one segment, which excludes the first specified segment, from among the plurality of segments included in the housing of the electronic device. According to an embodiment, the second specified segment may be separated from the first specified segment by a non-conductive material (e.g., at least one gap 231, 232, 233, 234, 235, 236, 237, and/or 238 of FIG. 2). According to an embodiment, the electronic device may perform wireless communication by using the first specified segment and/or the second specified segment as an antenna.

When it is identified in operation 1410 that the first specified segment and the second specified segment are not electrically connected to each other ('NO'), in operation 1415, the electronic device may reduce the strength of a wireless signal output through the first specified segment. According to an embodiment, the electronic device may transmit the wireless signal by using the first specified segment as an antenna. The electronic device may reduce the strength of the wireless signal transmitted through the first specified segment such that the strength of the wireless signal is smaller than or equal to specified strength. For example, the specified strength may be the strength of the wireless signal that satisfies the specific absorption rate (SAR) standard.

When it is identified in operation 1410 that the first specified segment and the second specified segment are electrically connected to each other ('YES'), in operation 1420, the electronic device may determine whether the external object is close to a third specified segment at the specified level or higher. According to an embodiment, the third specified segment may be one segment, which excludes the first specified segment and the second specified segment, from among the plurality of segments included in the housing of the electronic device. According to an embodiment, the third specified segment may be separated from the first specified segment and/or the second specified segment by the non-conductive material (e.g., at least one gap 231, 232, 233, 234, 235, 236, 237, and/or 238 of FIG. 2). According to an embodiment, the electronic device may perform wireless communication by using the first specified segment, the second specified segment, and/or the third specified segment as an antenna.

According to an embodiment, the electronic device may determine whether the external object is close to the third specified segment at the specified level or higher, through the proximity sensor. According to an embodiment, the third specified segment may operate as an electrode, which is used by the proximity sensor to detect the proximity of the external object. According to an embodiment, the proximity sensor may generate a sensing signal indicating the capacitance of the third specified segment changing due to an external object. The electronic device may determine whether the external object is in proximity, based on the sensing signal generated by the proximity sensor. For example, when a capacitance change amount of the third specified segment is greater than or equal to a specified value, the electronic device may identify that the external object is close to the third specified segment at the specified level or higher.

When it is identified in operation 1420 that the external object is close to the third specified segment at the specified level or higher ('YES'), the electronic device may terminate the operation according to FIG. 14. In this case, the electronic device may perform wireless communication by using an antenna formed by electrically connecting the first specified segment and the second specified segment to each other.

When it is identified in operation 1420 that the external object is not close to the third specified segment at the specified level or higher ('NO'), in operation 1425, the electronic device may electrically connect the second specified segment and the third specified segment. For example, the electronic device may electrically connect all of the first specified segment, the second specified segment, and the third specified segment. For another example, the electronic device may disconnect the electrical connection between the first specified segment and the second specified segment, and may electrically connect the second specified segment and the third specified segment. According to an embodiment, the electronic device may perform wireless communication by using an antenna formed by electrically connecting the second specified segment and the third specified segment.

Through such the operations, the electronic device may improve communication quality by replacing a segment, which is closer to an external object at a specified level or higher, from among segments, which are electrically connected to each other and operate as an antenna, with another segment.

FIG. 15 is a flowchart of an operation of an electronic device, according to an embodiment.

According to an embodiment, it may be understood that operations 1505 to 1530 are performed by a processor (e.g., the processor 120 of FIG. 1) of an electronic device.

Referring to FIG. 15, in operation 1505, the electronic device may determine whether an external object (e.g., a human body or an object) is close to a first specified segment at a specified level or higher. According to an embodiment, the first specified segment may be one of a plurality of segments (e.g., the plurality of segments 221, 222, 223, 224, 225, and/or 226 of FIG. 2) included in housing (e.g., the second housing 220 of FIG. 2) of the electronic device. According to an embodiment, the electronic device may perform wireless communication by using the first specified segment as an antenna.

According to an embodiment, the electronic device may determine whether the external object is close to the first specified segment at a specified level or higher, through a proximity sensor (e.g., the sensor module 176 of FIG. 1). According to an embodiment, the proximity sensor may generate a sensing signal for determining whether the external object is in proximity. The proximity sensor may generate the sensing signal for determining whether the external object is in proximity, through an electrode. According to an embodiment, the first specified segment may operate as the electrode, which is used by the proximity sensor to detect the proximity of the external object. According to an embodiment, the proximity sensor may generate the sensing signal indicating the capacitance of the first specified segment changing due to the external object. The electronic device may determine whether the external object is in proximity, based on the sensing signal generated by the proximity sensor. For example, when a capacitance change amount of the first specified segment is greater than or equal to a specified value, the electronic device may identify that the external object is close to the first specified segment at the specified level or higher.

When it is identified in operation 1505 that the external object is not close to the first specified segment at the specified level or higher ('NO'), the electronic device may terminate the operation according to FIG. 15.

When it is identified in operation 1505 that the external object is close to the first specified segment at the specified level or higher ('YES'), in operation 1510, the electronic device may determine whether the first specified segment and a second specified segment are electrically connected to each other. According to an embodiment, the second specified segment may be one segment, which excludes the first specified segment, from among the plurality of segments included in the housing of the electronic device. According to an embodiment, the second specified segment may be separated from the first specified segment by a non-conductive material (e.g., at least one gap 231, 232, 233, 234, 235, 236, 237, and/or 238 of FIG. 2). According to an embodiment, the electronic device may perform wireless communication by using the first specified segment and/or the second specified segment as an antenna.

When it is identified in operation 1510 that the first specified segment and the second specified segment are not electrically connected to each other ('NO'), in operation 1515, the electronic device may reduce the strength of a wireless signal output through the first specified segment. According to an embodiment, the electronic device may transmit the wireless signal by using the first specified segment as an antenna. The electronic device may reduce the strength of the wireless signal transmitted through the first specified segment such that the strength of the wireless signal is smaller than or equal to specified strength. For example, the specified strength may be the strength of the wireless signal that satisfies the specific absorption rate (SAR) standard.

When it is identified in operation 1510 that the first specified segment and the second specified segment are electrically connected to each other ('YES'), in operation 1520, the electronic device may determine whether the external object is close to the second specified segment at the specified level or higher. According to an embodiment, the second specified segment may operate as an electrode, which is used by the proximity sensor to detect the proximity of the external object. According to an embodiment, the proximity sensor may generate the sensing signal indicating the capacitance of the second specified segment changing due to the external object. The electronic device may determine whether the external object is in proximity, based on the sensing signal generated by the proximity sensor. For example, when a capacitance change amount of the second specified segment is greater than or equal to a specified value, the electronic device may identify that the external object is close to the second specified segment at the specified level or higher.

When it is identified in operation 1520 that the external object is not close to the second specified segment at the specified level or higher ('NO'), the electronic device may terminate the operation according to FIG. 15. In this case, the electronic device may perform wireless communication by using an antenna formed by electrically connecting the first specified segment and the second specified segment to each other.

When it is identified in operation 1520 that the external object is close to the second specified segment at the specified level or higher ('YES'), in operation 1525, the electronic device may determine whether the external object is close to a third specified segment at the specified level or higher. According to an embodiment, the third specified segment may be one segment, which excludes the first specified segment and the second specified segment, from among the plurality of segments included in the housing of the electronic device. According to an embodiment, the third specified segment may be separated from the first specified segment and/or the second specified segment by the non-conductive material (e.g., at least one gap 231, 232, 233, 234, 235, 236, 237, and/or 238 of FIG. 2). According to an embodiment, the electronic device may perform wireless communication by using the first specified segment, the second specified segment, and/or the third specified segment as an antenna.

According to an embodiment, the electronic device may determine whether the external object is close to the third specified segment at the specified level or higher, through the proximity sensor. According to an embodiment, the third specified segment may operate as an electrode, which is used by the proximity sensor to detect the proximity of the external object. According to an embodiment, the proximity sensor may generate a sensing signal indicating the capacitance of the third specified segment changing due to an external object. The electronic device may determine whether the external object is in proximity, based on the sensing signal generated by the proximity sensor. For example, when a capacitance change amount of the third specified segment is greater than or equal to a specified value, the electronic device may identify that the external object is close to the third specified segment at the specified level or higher.

When it is identified in operation 1525 that the external object is close to the third specified segment at the specified level or higher ('YES'), the electronic device may terminate the operation according to FIG. 15. In this case, the electronic device may perform wireless communication by using an antenna formed by electrically connecting the first specified segment and the second specified segment to each other.

When it is identified in operation 1525 that the external object is not close to the third specified segment at the specified level or higher ('NO'), in operation 1530, the electronic device may electrically connect the second specified segment and the third specified segment. For example, the electronic device may electrically connect all of the first specified segment, the second specified segment, and the third specified segment. For another example, the electronic device may disconnect the electrical connection between the first specified segment and the second specified segment, and may electrically connect the second specified segment and the third specified segment. According to an embodiment, the electronic device may perform wireless communication by using an antenna formed by electrically connecting the second specified segment and the third specified segment.

Through such the operations, the electronic device may improve communication quality by replacing a segment, which is closer to an external object at a specified level or higher, from among segments, which are electrically connected to each other and operate as an antenna, with another segment.

According to an embodiment disclosed in this specification, an electronic device may include a housing including a conductive portion, the conductive portion including a first segment, and a second segment separated from the first segment by a first gap, a first switch that selectively connects the first segment and the second segment, a first wireless communication circuit including a first port and a second port, the first port being electrically connected to the first segment, and a second switch that selectively connects the second port and the second segment. The first wireless communication circuit may operate in a first mode or a second mode. The first mode may be configured to transmit and/or receive a wireless signal in a first frequency range by using a first antenna formed from the first segment electrically open to the second segment through the first switch, and to transmit and/or receive a wireless signal in the first frequency range by using a second antenna formed from the second segment electrically open to the first segment through the first switch and electrically connected to the second port through the second switch. The second mode may be configured to transmit and/or receive a wireless signal in the first frequency range and a second frequency range by using a third antenna formed from the first segment electrically connected to the second segment through the first switch and the second segment electrically open to the second port through the second switch. The second frequency range may be different from the first frequency range.

According to an embodiment disclosed in this specification, the conductive portion may include a third segment separated from the first segment and/or the second segment by a second gap. The first wireless communication circuit may include a third port. The electronic device may include a second wireless communication circuit, and a third switch connected to the third segment and selectively connecting the third segment to the third port of the first wireless communication circuit or the second wireless communication circuit.

According to an embodiment disclosed in this specification, the first wireless communication circuit may be configured to operate in the first mode, the second mode, or a third mode. The third mode may be configured to transmit and/or receive a wireless signal in the first frequency range and the second frequency range by using the third antenna formed from the first segment electrically connected to the second segment through the first switch and the second segment electrically open to the second port through the second switch, and to transmit and/or receive a wireless signal in the first frequency range by using a fourth antenna formed from the third segment electrically open to the second wireless communication circuit through the third switch and electrically connected to the third port through the third switch.

According to an embodiment disclosed in this specification, the conductive portion may include a third segment separated from the first segment and/or the second segment by a second gap. The electronic device may include a second wireless communication circuit, and a fourth switch connected to the third segment and selectively connecting the third segment to the first segment or the second wireless communication circuit.

According to an embodiment disclosed in this specification, the first wireless communication circuit may be configured to operate in the first mode, the second mode, or a fourth mode. The fourth mode may be configured to transmit and/or receive a wireless signal in the first frequency range and the second frequency range by using a fifth antenna formed from the third segment electrically connected to the first segment through the fourth switch, and the first segment electrically open to the second segment through the first switch, and to transmit and/or receive a wireless signal in the first frequency range by using the second antenna formed from the second segment electrically open to the first segment through the first switch and electrically connected to the second port through the second switch.

According to an embodiment disclosed in this specification, the first mode may be configured to transmit and/or receive a wireless signal in the first frequency range by using the first antenna formed from the first segment, which is electrically open to the second segment through the first switch and electrically open to the third segment through the fourth switch. The second mode may be configured to transmit and/or receive a wireless signal in the first frequency range and a second frequency range by using a third antenna formed from the first segment, which is electrically open to the third segment through the fourth switch and which is electrically connected to the second segment through the first switch, and the second segment electrically open to the second port through the second switch.

According to an embodiment disclosed in this specification, a minimum value of the first frequency range may be higher than a maximum value of the second frequency range.

According to an embodiment disclosed in this specification, the first gap may be filled with a non-conductive material.

According to an embodiment disclosed in this specification, the electronic device may include a ground part. The first segment may be connected to the ground part. The first switch may connect the first segment to the second segment or the ground part.

According to an embodiment disclosed in this specification, the first mode may be configured to transmit and/or receive a wireless signal in the first frequency range by using the first antenna formed from the first segment, which is electrically open to the second segment through the first switch and which is connected to the ground part, and may be configured to transmit and/or receive a wireless signal in the first frequency range by using the second antenna formed from the second segment, which is electrically open to the first segment through the first switch, which is connected to the ground part through the first switch, and which is electrically connected to the second port through the second switch.

According to an embodiment disclosed in this specification, the electronic device may include a ground part. The first segment may be connected to the ground part. The second switch may electrically connect the second segment to the second port or the ground part.

According to an embodiment disclosed in this specification, the second mode may be configured to transmit and/or receive a wireless signal in the first frequency range and the second frequency range by using the third antenna formed from the first segment electrically connected to the second segment through the first switch, and the second segment electrically open to the second port through the second switch and connected to the ground part through the second switch.

According to an embodiment disclosed in this specification, the electronic device may include a first housing and a second housing pivotably connected to the first housing. The second housing may include at least one connector for connecting an external device to the electronic device. The housing may be the second housing.

According to an embodiment disclosed in this specification, an electronic device may include a housing including a conductive portion, the conductive portion including a plurality of segments, and the plurality of segments being respectively separated by a plurality of gaps, a wireless communication circuit that performs wireless communication by using at least one of the plurality of segments as an antenna, a proximity sensor that detects whether an external object is in proximity, and a processor electrically connected to the wireless communication circuit and the proximity sensor. The processor may be configured to determine whether an external object is close to a first specified segment among the plurality of segments at a specified level or higher, through the proximity sensor, to determine whether the first specified segment is electrically connected to a second specified segment among the plurality of segments based on an external object being identified as being close to the first specified segment at the specified level or higher, to determine whether an external object is close to a third specified segment among the plurality of segments at the specified level or higher, based on the first specified segment being identified as being electrically connected to the second specified segment, and to electrically connect the second specified segment and the third specified segment, based on an external object being identified as being close to the third specified segment at less than the specified level.

According to an embodiment disclosed in this specification, the processor may be configured to disconnect a connection between the first specified segment and the second specified segment and may be configured to electrically connect the second specified segment and the third specified segment based on an external object being identified as being close to the third specified segment at less than the specified level.

According to an embodiment disclosed in this specification, the processor may be configured to determine whether an external object is close to the second specified segment at the specified level or higher, through the proximity sensor based on the first specified segment being identified as being electrically connected to the second specified segment, and to determine whether an external object is close to a third specified segment among the plurality of segments at the specified level or higher, based on the second specified segment being identified as being close to the second specified segment at the specified level or higher.

According to an embodiment disclosed in this specification, the wireless communication circuit may be configured to perform the wireless communication by using the second specified segment and the third specified segment, which are electrically connected, as the antenna.

According to an embodiment disclosed in this specification, the processor may be configured to reduce the strength of a wireless signal output through the first specified segment based on the first specified segment being identified as not being electrically connected to the second specified segment.

According to an embodiment disclosed in this specification, the first specified segment, the second specified segment, and the third specified segment may operate as an electrode used by the proximity sensor to detect whether an external object is in proximity.

According to an embodiment disclosed in this specification, the electronic device may include a first housing and a second housing pivotably connected to the first housing. The second housing may include at least one connector for connecting an external device to the electronic device. The housing may be the second housing.

The electronic device according to various embodiments disclosed in the disclosure may be various types of devices. The electronic device may include, for example, a portable communication device (e.g., a smartphone), a computer device, a portable multimedia device, a mobile medical appliance, a camera, a wearable device, or a home appliance. An electronic device according to an embodiment of this specification may not be limited to the above-described electronic devices.

With regard to description of drawings, similar or related components may be marked by similar reference marks/numerals. The singular form of the noun corresponding to an item may include one or more of items, unless interpreted otherwise in context. In the disclosure, the expressions "A or B", "at least one of A and B", "at least one of A or B", "A, B, or C", "at least one of A, B, and C", and "at least one of A, B, or C" may include any and all combinations of one or more of the associated listed items. The terms, such as "first" or "second" may be used to simply distinguish the corresponding component from the other component, but do not limit the corresponding components in other aspects (e.g., importance or order). When a component (e.g., a first component) is referred to as being "coupled with/to" or "connected to" another component (e.g., a second component) with or without the term of "operatively" or "communicatively", it may mean that a component is connectable to the other component, directly (e.g., by wire), wirelessly, or through the third component.

In various embodiments of the disclosure, the term "module" used herein may include a unit, which is implemented with hardware, software, or firmware, and may be interchangeably used with the terms "logic", "logical block", "part", or "circuit". The "module" may be a minimum unit of an integrated part or may be a minimum unit of the part for performing one or more functions or a part thereof. For example, according to an embodiment, the module may be implemented in the form of an application-specific integrated circuit (ASIC).

Various embodiments of the disclosure may be implemented with software (e.g., program 140) including one or more instructions stored in a storage medium (e.g., the embedded memory 136 or the external memory 138) readable by a machine (e.g., the electronic device 101). For example, the processor (e.g., the processor 120) of the machine (e.g., the electronic device 101) may call at least one instruction of the stored one or more instructions from a storage medium and then may execute the at least one instruction. This enables the machine to operate to perform at least one function depending on the called at least one instruction. The one or more instructions may include a code generated by a complier or a code executable by an interpreter. The machine-readable storage medium may be provided in the form of a non-transitory storage medium. Herein, 'non-transitory' just means that the storage medium is a tangible device and does not include a signal (e.g., electromagnetic waves), and this term does not distinguish between the case where data is semipermanently stored in the storage medium and the case where the data is stored temporarily.

According to an embodiment, a method according to various embodiments disclosed herein may be provided to be included in a computer program product. The computer program product may be traded between a seller and a buyer as a product. The computer program product may be distributed in the form of a machine-readable storage medium (e.g., compact disc read only memory (CD-ROM)) or may be distributed (e.g., downloaded or uploaded), through an application store (e.g., PlayStore^{™}), directly between two user devices (e.g., smartphones), or online. In the case of on-line distribution, at least part of the computer program product may be at least temporarily stored in the machine-readable storage medium such as the memory of a manufacturer's server, an application store's server, or a relay server or may be generated temporarily.

According to various embodiments, each component (e.g., a module or a program) of the above-described components may include a single entity or a plurality of entities, and some of the plurality of objects may be separately arranged on other components. According to various embodiments, one or more components of the above-described components or operations may be omitted, or one or more other components or operations may be added. Alternatively or additionally, a plurality of components (e.g., a module or a program) may be integrated into one component. In this case, the integrated component may perform one or more functions of each component of the plurality of components in the manner same as or similar to being performed by the corresponding component of the plurality of components prior to the integration. According to various embodiments, operations executed by modules, programs, or other components may be executed by a successive method, a parallel method, a repeated method, or a heuristic method. Alternatively, at least one or more of the operations may be executed in another order or may be omitted, or one or more operations may be added.

## Claims

1. An electronic device (100, 1000) comprising:
a housing (210, 220) including a conductive portion, the conductive portion including a first segment (221), a second segment (222) separated from the first segment (221) by a first gap (231), and a third segment (610) separated from the first segment (310) and the second segment (320) by a second gap (232);
a first switch (330) configured to selectively connect the first segment (221) and the second segment (222);
a first wireless communication circuit (350) including a first port (351), a second port (352), and a third port (353), the first port (351) being electrically connected to the first segment (310);
a second wireless communication circuit (630);
a second switch (340) configured to selectively connect the second port (352) and the second segment (320); and
a third switch (620) connected to the third segment (610) and configured to selectively connect the third segment (610) to the third port (353) of the first wireless communication circuit (350) or the second wireless communication circuit (630),
wherein the first wireless communication circuit (350) is configured to transmit and/or receive a wireless signals of different frequency bands through the first port (351), the second port (352), and the third port (353), respectively,
wherein the first wireless communication circuit (350) is configured to operate in a first mode or a second mode,
wherein the first mode is configured to:
transmit and/or receive a wireless signal in a first frequency range by using a first antenna formed from the first segment (310) electrically open to the second segment (320) through the first switch (330); and
transmit and/or receive a wireless signal in the first frequency range by using a second antenna formed from the second segment (320) electrically open to the first segment (310) through the first switch (330) and electrically connected to the second port (352) through the second switch (340),
wherein the second mode is configured to:
transmit and/or receive a wireless signal in the first frequency range and a second frequency range by using a third antenna formed from the first segment (310) electrically connected to the second segment (320) through the first switch (330) and the second segment (320) electrically open to the second port (352) through the second switch (340), and
wherein the second frequency range is different from the first frequency range.

2. The electronic device (100, 1000) of claim 1, wherein the first wireless communication circuit (350) is configured to operate in the first mode, the second mode, or a third mode,
wherein the third mode is configured to:
transmit and/or receive a wireless signal in the first frequency range and the second frequency range by using the third antenna formed from the first segment (310) electrically connected to the second segment (320) through the first switch (330) and the second segment (320) electrically open to the second port (352) through the second switch (340); and
transmit and/or receive a wireless signal in the first frequency range by using a fourth antenna formed from the third segment (610) electrically open to the second wireless communication circuit (630) through the third switch (620) and electrically connected to the third port (353) through the third switch (610).

3. The electronic device (100, 1000) of claim 1, wherein the conductive portion includes a fourth segment separated from the first segment (310) and the second segment (320) by a second gap (232),
the electronic device further comprising:
a fourth switch (1010) connected to the third segment (610) and configured to selectively connect the fourth segment to the first segment (310) or the second wireless communication circuit (630).

4. The electronic device (100, 1000) of claim 3, wherein the first wireless communication circuit (350) is configured to operate in the first mode, the second mode, or a fourth mode,
wherein the fourth mode is configured to:
transmit and/or receive a wireless signal in the first frequency range and the second frequency range by using a fifth antenna formed from the fourth segment electrically connected to the first segment (310) through the fourth switch (1010), and the first segment (310) electrically open to the second segment (320) through the first switch (330); and
transmit and/or receive a wireless signal in the first frequency range by using the second antenna formed from the second segment (320) electrically open to the first segment (310) through the first switch (330) and electrically connected to the second port (352) through the second switch (340).

5. The electronic device (100, 1000) of claim 4, wherein the first mode is configured to:
transmit and/or receive a wireless signal in the first frequency range by using the first antenna formed from the first segment (310), which is electrically open to the second segment (320) through the first switch (330) and electrically open to the fourth segment through the fourth switch (1010), and
wherein the second mode is configured to:
transmit and/or receive a wireless signal in the first frequency range and the second frequency range by using a third antenna formed from the first segment (310), which is electrically open to the fourth segment through the fourth switch (1010) and which is electrically connected to the second segment (320) through the first switch (330), and the second segment (320) electrically open to the second port (352) through the second switch (320).

6. The electronic device (100, 1000) of claim 1, wherein a minimum value of the first frequency range is higher than a maximum value of the second frequency range.

7. The electronic device (100, 1000) of claim 1, wherein the first gap is filled with a non-conductive material.

8. The electronic device (100, 1000) of claim 1, further comprising:
a ground part,
wherein the first segment (310) is connected to the ground part, and
wherein the first switch (330) is configured to connect the first segment (310) to the second segment (320) or the ground part.

9. The electronic device (100, 1000) of claim 8, wherein the first mode is configured to:
transmit and/or receive a wireless signal in the first frequency range by using the first antenna formed from the first segment (310), which is electrically open to the second segment (320) through the first switch (330) and which is connected to the ground part; and
transmit and/or receive a wireless signal in the first frequency range by using the second antenna formed from the second segment (320), which is electrically open to the first segment (310) through the first switch (330), which is connected to the ground part through the first switch (330), and which is electrically connected to the second port (352) through the second switch (340).

10. The electronic device (100, 1000) of claim 1, further comprising:
a ground part,
wherein the first segment (310) is connected to the ground part, and
wherein the second switch (340) is configured to electrically connect the second segment (320) to the second port (352) or the ground part.

11. The electronic device (100, 1000) of claim 10, wherein the second mode is configured to:
transmit and/or receive a wireless signal in the first frequency range and the second frequency range by using the third antenna formed from the first segment (310) electrically connected to the second segment (320) through the first switch (330), and the second segment (320) electrically open to the second port (352) through the second switch (340) and connected to the ground part through the second switch (340).

12. The electronic device (100, 1000) of claim 1, further comprising:
a first housing (210); and
a second housing (220) pivotably connected to the first housing (210),
wherein the second housing (220) includes at least one connector for connecting an external device to the electronic device (100, 1000), and
wherein the housing is the second housing (220).

## Patentansprüche

1. Elektronische Vorrichtung (100, 1000), umfassend:
ein Gehäuse (210, 220), das einen leitfähigen Abschnitt beinhaltet, wobei der leitfähige Abschnitt ein erstes Segment (221), ein zweites Segment (222), das durch einen ersten Spalt (231) von dem ersten Segment (221) getrennt ist, und ein drittes Segment (610) beinhaltet, das durch einen zweiten Spalt (232) von dem ersten Segment (310) und dem zweiten Segment (320) getrennt ist; einen ersten Schalter (330), der dazu konfiguriert ist, das erste Segment (221) und das zweite Segment (222) selektiv zu verbinden;
eine erste drahtlose Kommunikationsschaltung (350), die einen ersten Anschluss (351), einen zweiten Anschluss (352) und einen dritten Anschluss (353) beinhaltet, wobei der erste Anschluss (351) elektrisch mit dem ersten Segment (310) verbunden ist;
eine zweite drahtlose Kommunikationsschaltung (630);
einen zweiten Schalter (340), der dazu konfiguriert ist, den zweiten Anschluss (352) und das zweite Segment (320) selektiv zu verbinden; und
einen dritten Schalter (620), der mit dem dritten Segment (610) verbunden und dazu konfiguriert ist, das dritte Segment (610) selektiv mit dem dritten Anschluss (353) der ersten drahtlosen Kommunikationsschaltung (350) oder der zweiten drahtlosen Kommunikationsschaltung (630) zu verbinden,
wobei die erste drahtlose Kommunikationsschaltung (350) dazu konfiguriert ist, drahtlose Signale unterschiedlicher Frequenzbänder über den ersten Anschluss (351), den zweiten Anschluss (352) bzw. den dritten Anschluss (353) zu übertragen und/oder zu empfangen, wobei die erste drahtlose Kommunikationsschaltung (350) dazu konfiguriert ist, in einem ersten Modus oder einem zweiten Modus betrieben zu werden,
wobei der erste Modus zu Folgendem konfiguriert ist:
Senden und/oder Empfangen eines drahtlosen Signals in einem ersten Frequenzbereich unter Verwendung einer ersten Antenne, die aus dem ersten Segment (310) gebildet ist, das durch den ersten Schalter (330) elektrisch zu dem zweiten Segment (320) offen ist; und
Senden und/oder Empfangen eines drahtlosen Signals in dem ersten Frequenzbereich unter Verwendung einer zweiten Antenne, die aus dem zweiten Segment (320) gebildet ist, das durch den ersten Schalter (330) elektrisch zu dem ersten Segment (310) offen ist und durch den zweiten Schalter (340) elektrisch mit dem zweiten Anschluss (352) verbunden ist,
wobei der zweite Modus zu Folgendem konfiguriert ist:
Senden und/oder Empfangen eines drahtlosen Signals in dem ersten Frequenzbereich und einem zweiten Frequenzbereich unter Verwendung einer dritten Antenne, die aus dem ersten Segment (310), das durch den ersten Schalter (330) elektrisch mit dem zweiten Segment (320) verbunden ist, und dem zweiten Segment (320) gebildet ist, das durch den zweiten Schalter (340) elektrisch zu dem zweiten Anschluss (352) offen ist, und
wobei sich der zweite Frequenzbereich von dem ersten Frequenzbereich unterscheidet.

2. Elektronische Vorrichtung (100, 1000) nach Anspruch 1, wobei die erste drahtlose Kommunikationsschaltung (350) dazu konfiguriert ist, in dem ersten Modus, dem zweiten Modus oder einem dritten Modus betrieben zu werden,
wobei der dritte Modus zu Folgendem konfiguriert ist:
Senden und/oder Empfangen eines drahtlosen Signals in dem ersten Frequenzbereich und dem zweiten Frequenzbereich unter Verwendung der dritten Antenne, die aus dem ersten Segment (310), das durch den ersten Schalter (330) elektrisch mit dem zweiten Segment (320) verbunden ist, und dem zweiten Segment (320) gebildet ist, das durch den zweiten Schalter (340) elektrisch zu dem zweiten Anschluss (352) offen ist; und
Senden und/oder Empfangen eines drahtlosen Signals in dem ersten Frequenzbereich unter Verwendung einer vierten Antenne, die aus dem dritten Segment (610) gebildet ist, das durch den dritten Schalter (620) elektrisch zu der zweiten drahtlosen Kommunikationsschaltung (630) offen ist und durch den dritten Schalter (610) elektrisch mit dem dritten Anschluss (353) verbunden ist.

3. Elektronische Vorrichtung (100, 1000) nach Anspruch 1, wobei der leitfähige Abschnitt ein viertes Segment beinhaltet, das durch einen zweiten Spalt (232) von dem ersten Segment (310) und dem zweiten Segment (320) getrennt ist,
wobei die elektronische Vorrichtung ferner Folgendes umfasst:
einen vierten Schalter (1010), der mit dem dritten Segment (610) verbunden und dazu konfiguriert ist, das vierte Segment selektiv mit dem ersten Segment (310) oder der zweiten drahtlosen Kommunikationsschaltung (630) zu verbinden.

4. Elektronische Vorrichtung (100, 1000) nach Anspruch 3, wobei die erste drahtlose Kommunikationsschaltung (350) dazu konfiguriert ist, in dem ersten Modus, dem zweiten Modus oder einem vierten Modus betrieben zu werden,
wobei der vierte Modus zu Folgendem konfiguriert ist:
Senden und/oder Empfangen eines drahtlosen Signals in dem ersten Frequenzbereich und dem zweiten Frequenzbereich unter Verwendung einer fünften Antenne, die aus dem vierten Segment gebildet ist, das durch den vierten Schalter (1010) elektrisch mit dem ersten Segment (310) verbunden ist, und wobei das erste Segment (310) durch den ersten Schalter (330) elektrisch zu dem zweiten Segment (320) offen ist; und
Senden und/oder Empfangen eines drahtlosen Signals in dem ersten Frequenzbereich unter Verwendung der zweiten Antenne, die aus dem zweiten Segment (320) gebildet ist, das durch den ersten Schalter (330) elektrisch zu dem ersten Segment (310) offen ist und durch den zweiten Schalter (340) elektrisch mit dem zweiten Anschluss (352) verbunden ist.

5. Elektronische Vorrichtung (100, 1000) nach Anspruch 4, wobei der erste Modus zu Folgendem konfiguriert ist:
Senden und/oder Empfangen eines drahtlosen Signals in dem ersten Frequenzbereich unter Verwendung der ersten Antenne, die aus dem ersten Segment (310) gebildet ist, das durch den ersten Schalter (330) elektrisch zu dem zweiten Segment (320) offen ist und durch den vierten Schalter (1010) elektrisch zu dem vierten Segment offen ist, und
wobei der zweite Modus zu Folgendem konfiguriert ist:
Senden und/oder Empfangen eines drahtlosen Signals in dem ersten Frequenzbereich und dem zweiten Frequenzbereich unter Verwendung einer dritten Antenne, die aus dem ersten Segment (310) gebildet ist, das durch den vierten Schalter (1010) elektrisch zu dem vierten Segment offen ist und das durch den ersten Schalter (330) elektrisch mit dem zweiten Segment (320) verbunden ist, und wobei das zweite Segment (320) durch den zweiten Schalter (320) elektrisch zu dem zweiten Anschluss (352) offen ist.

6. Elektronische Vorrichtung (100, 1000) nach Anspruch 1, wobei ein Minimalwert des ersten Frequenzbereichs höher als ein Maximalwert des zweiten Frequenzbereichs ist.

7. Elektronische Vorrichtung (100, 1000) nach Anspruch 1, wobei der erste Spalt mit einem nicht leitfähigen Material gefüllt ist.

8. Elektronische Vorrichtung (100, 1000) nach Anspruch 1, ferner umfassend:
einen Erdungsteil,
wobei das erste Segment (310) mit dem Erdungsteil verbunden ist und
wobei der erste Schalter (330) dazu konfiguriert ist, das erste Segment (310) mit dem zweiten Segment (320) oder dem Erdungsteil zu verbinden.

9. Elektronische Vorrichtung (100, 1000) nach Anspruch 8, wobei der erste Modus zu Folgenden konfiguriert ist:
Senden und/oder Empfangen eines drahtlosen Signals in dem ersten Frequenzbereich unter Verwendung der ersten Antenne, die aus dem ersten Segment (310) gebildet ist, das durch den ersten Schalter (330) elektrisch zu dem zweiten Segment (320) offen ist und das mit dem Erdungsteil verbunden ist; und
Senden und/oder Empfangen eines drahtlosen Signals in dem ersten Frequenzbereich unter Verwendung der zweiten Antenne, die aus dem zweiten Segment (320) gebildet ist, das durch den ersten Schalter (330) elektrisch zu dem ersten Segment (310) offen ist, das durch den ersten Schalter (330) mit dem Erdungsteil verbunden ist und das durch den zweiten Schalter (340) elektrisch mit dem zweiten Anschluss (352) verbunden ist.

10. Elektronische Vorrichtung (100, 1000) nach Anspruch 1, ferner umfassend:
einen Erdungsteil,
wobei das erste Segment (310) mit dem Erdungsteil verbunden ist und
wobei der zweite Schalter (340) dazu konfiguriert ist, das zweite Segment (320) elektrisch mit dem zweiten Anschluss (352) oder dem Erdungsteil zu verbinden.

11. Elektronische Vorrichtung (100, 1000) nach Anspruch 10, wobei der zweite Modus zu Folgendem konfiguriert ist:
Senden und/oder Empfangen eines drahtlosen Signals in dem ersten Frequenzbereich und dem zweiten Frequenzbereich unter Verwendung der dritten Antenne, die aus dem ersten Segment (310), das durch den ersten Schalter (330) elektrisch mit dem zweiten Segment (320) verbunden ist, und dem zweiten Segment (320) gebildet ist, das durch den zweiten Schalter (340) elektrisch zu dem zweiten Anschluss (352) offen ist und durch den zweiten Schalter (340) mit dem Erdungsteil verbunden ist.

12. Elektronische Vorrichtung (100, 1000) nach Anspruch 1, ferner umfassend:
ein erstes Gehäuse (210); und
ein zweites Gehäuse (220), das schwenkbar mit dem ersten Gehäuse (210) verbunden ist,
wobei das zweite Gehäuse (220) mindestens einen Verbinder zum Verbinden einer externen Vorrichtung mit der elektronischen Vorrichtung (100, 1000) beinhaltet und
wobei das Gehäuse das zweite Gehäuse (220) ist.

## Revendications

1. Dispositif électronique (100, 1000), comprenant :
un boîtier (210, 220) comprenant une partie conductrice, la partie conductrice comprenant un premier segment (221), un deuxième segment (222) séparé du premier segment (221) par un premier espace (231), et un troisième segment (610) séparé du premier segment (310) et du deuxième segment (320) par un deuxième espace (232) ;
un premier commutateur (330) configuré pour connecter sélectivement le premier segment (221) et le deuxième segment (222) ;
un premier circuit de communication sans fil (350) comprenant un premier port (351), un deuxième port (352) et un troisième port (353), le premier port (351) étant électriquement connecté au premier segment (310) ;
un deuxième circuit de communication sans fil (630) ;
un deuxième commutateur (340) configuré pour connecter sélectivement le deuxième port (352) et le deuxième segment (320) ; et
un troisième commutateur (620) connecté au troisième segment (610) et configuré pour connecter sélectivement le troisième segment (610) au troisième port (353) du premier circuit de communication sans fil (350) ou du deuxième circuit de communication sans fil (630),
dans lequel le premier circuit de communication sans fil (350) est configuré pour transmettre et/ou recevoir des signaux sans fil de différentes bandes de fréquences via le premier port (351), le deuxième port (352) et le troisième port (353), respectivement,
dans lequel le premier circuit de communication sans fil (350) est configuré pour fonctionner dans un premier mode ou un deuxième mode,
dans lequel le premier mode est configuré pour :
émettre et/ou recevoir un signal sans fil dans une première plage de fréquences en utilisant une première antenne formée par le premier segment (310) électriquement ouvert vers le deuxième segment (320) via le premier commutateur (330) ; et
émettre et/ou recevoir un signal sans fil dans la première plage de fréquences en utilisant une deuxième antenne formée par le deuxième segment (320) électriquement ouvert vers le premier segment (310) via le premier commutateur (330) et électriquement connecté au deuxième port (352) via le deuxième commutateur (340),
dans lequel le deuxième mode est configuré pour :
émettre et/ou recevoir un signal sans fil dans la première plage de fréquences et une deuxième plage de fréquences en utilisant une troisième antenne formée par le premier segment (310) électriquement connecté au deuxième segment (320) via le premier commutateur (330) et le deuxième segment (320) électriquement ouvert vers le deuxième port (352) via le deuxième commutateur (340), et
dans lequel la deuxième plage de fréquences est différente de la première plage de fréquences.

2. Dispositif électronique (100, 1000) selon la revendication 1, dans lequel le premier circuit de communication sans fil (350) est configuré pour fonctionner dans le premier mode, le deuxième mode ou un troisième mode,
dans lequel le troisième mode est configuré pour :
émettre et/ou recevoir un signal sans fil dans la première plage de fréquences et la deuxième plage de fréquences en utilisant la troisième antenne formée par le premier segment (310) électriquement connecté au deuxième segment (320) via le premier commutateur (330) et le deuxième segment (320) électriquement ouvert vers le deuxième port (352) via le deuxième commutateur (340), et
émettre et/ou recevoir un signal sans fil dans la première plage de fréquences en utilisant une quatrième antenne formée par le troisième segment (610) électriquement ouvert sur le deuxième circuit de communication sans fil (630) via le troisième commutateur (620) et électriquement connectée au troisième port (353) via le troisième commutateur (610).

3. Dispositif électronique (100, 1000) selon la revendication 1, dans lequel la partie conductrice comprend un quatrième segment séparé du premier segment (310) et du deuxième segment (320) par un deuxième espace (232),
le dispositif électronique comprenant en outre :
un quatrième commutateur (1010) connecté au troisième segment (610) et configuré pour connecter sélectivement le quatrième segment au premier segment (310) ou au deuxième circuit de communication sans fil (630).

4. Dispositif électronique (100, 1000) selon la revendication 3, dans lequel le premier circuit de communication sans fil (350) est configuré pour fonctionner dans le premier mode, le deuxième mode ou un quatrième mode,
dans lequel le quatrième mode est configuré pour :
émettre et/ou recevoir un signal sans fil dans la première plage de fréquences et la deuxième plage de fréquences en utilisant une cinquième antenne formée par le quatrième segment électriquement connecté au premier segment (310) via le quatrième commutateur (1010), et le premier segment (310) électriquement ouvert vers le deuxième segment (320) via le premier commutateur (330), et émettre et/ou recevoir un signal sans fil dans la première plage de fréquences en utilisant la deuxième antenne formée par le deuxième segment (320) électriquement ouvert vers le premier segment (310) via le premier commutateur (330) et électriquement connecté au deuxième port (352) via le deuxième commutateur (340).

5. Dispositif électronique (100, 1000) selon la revendication 4, dans lequel le premier mode est configuré pour :
émettre et/ou recevoir un signal sans fil dans la première plage de fréquences en utilisant la première antenne formée par le premier segment (310), qui est électriquement ouvert vers le deuxième segment (320) via le premier commutateur (330) et électriquement ouvert vers le quatrième segment via le quatrième commutateur (1010), et
dans lequel le deuxième mode est configuré pour :
émettre et/ou recevoir un signal sans fil dans la première plage de fréquences et la deuxième plage de fréquences en utilisant une troisième antenne formée par le premier segment (310), qui est électriquement ouvert vers le quatrième segment via le quatrième commutateur (1010) et qui est électriquement connecté au deuxième segment (320) via le premier commutateur (330), et le deuxième segment (320) électriquement ouvert vers le deuxième port (352) via le deuxième commutateur (320).

6. Dispositif électronique (100, 1000) selon la revendication 1, dans lequel une valeur minimale de la première plage de fréquences est supérieure à une valeur maximale de la deuxième plage de fréquences.

7. Dispositif électronique (100, 1000) selon la revendication 1, dans lequel le premier espace est rempli d'un matériau non conducteur.

8. Dispositif électronique (100, 1000) selon la revendication 1, comprenant en outre :
une partie de masse,
dans lequel le premier segment (310) est connecté à la partie de masse, et
dans lequel le premier commutateur (330) est configuré pour connecter le premier segment (310) au deuxième segment (320) ou à la partie de masse.

9. Dispositif électronique (100, 1000) selon la revendication 8, dans lequel le premier mode est configuré pour :
émettre et/ou recevoir un signal sans fil dans la première plage de fréquences en utilisant la première antenne formée par le premier segment (310), qui est électriquement ouvert vers le deuxième segment (320) via le premier commutateur (330) et qui est connecté à la partie de masse ; et
émettre et/ou recevoir un signal sans fil dans la première plage de fréquences en utilisant la deuxième antenne formée par le deuxième segment (320), qui est électriquement ouvert vers le premier segment (310) via le premier commutateur (330), qui est connecté à la partie de masse via le premier commutateur (330), et qui est électriquement connecté au deuxième port (352) via le deuxième commutateur (340).

10. Dispositif électronique (100, 1000) selon la revendication 1, comprenant en outre :
une partie de masse,
dans lequel le premier segment (310) est connecté à la partie de masse, et
dans lequel le deuxième commutateur (340) est configuré pour connecter électriquement le deuxième segment (320) au deuxième port (352) ou à la partie de masse.

11. Dispositif électronique (100, 1000) selon la revendication 10, dans lequel le deuxième mode est configuré pour :
émettre et/ou recevoir un signal sans fil dans la première plage de fréquences et la deuxième plage de fréquences en utilisant la troisième antenne formée par le premier segment (310) électriquement connecté au deuxième segment (320) via le premier commutateur (330), et le deuxième segment (320) électriquement ouvert vers le deuxième port (352) via le deuxième commutateur (340) et connecté à la partie de masse via le deuxième commutateur (340).

12. Dispositif électronique (100, 1000) selon la revendication 1, comprenant en outre :
un premier boîtier (210) ; et
un second boîtier (220) connecté de manière pivotante au premier boîtier (210),
dans lequel le second boîtier (220) comprend au moins un connecteur pour connecter un dispositif externe au dispositif électronique (100, 1000), et
dans lequel le boîtier est le second boîtier (220).
